# EUROPEAN PATENT APPLICATION

(11) **EP 4 654 695 A1**
(43) Date of publication of application: **26.11.2025**
(21) Application number: 24755872.9
(22) Date of filing: 16.01.2024
(51) Int. Cl.: H04W 68/02

(54) **COMMUNICATION METHOD AND APPARATUS**

(30) Priority: 14.02.2023 CN 202310158277; 17.02.2023 CN 202310163334
(71) Applicant: Huawei Technologies Co., Ltd., Shenzhen, Guangdong 518129 (CN)
(72) Inventor: XUE, Yifan, Shenzhen, Guangdong 518129 (CN); MADIER, Louis, Shenzhen, Guangdong 518129 (CN); XUE, Lixia, Shenzhen, Guangdong 518129 (CN); TIE, Xiaolei, Shenzhen, Guangdong 518129 (CN)
(74) Representative: MERH-IP Matias Erny Reichl Hoffmann Patentanwälte PartG mbB
(86) International application number: PCT/CN2024/072571
(87) International publication number: WO 2024/169497

(57) **Abstract**

This application provides a communication method and apparatus. The method may be applied to a communication system like NR, LTE, or V2X. The method includes: A terminal device 120 first determines information 1, where the information 1 indicates a quantity of resources 1 used by the terminal device 120 to monitor a signal 1, and then the terminal device 120 monitors the signal 1 based on the information 1. In this way, the terminal device 120 can monitor the signal 1 based on the quantity of resources 1 that is indicated by the information 1, to avoid a waste of resources used for transmitting the signal 1, and improve utilization of the resources used for transmitting the signal 1.

## Description

This application claims priorities to Chinese Patent Application No. 202310158277.6, filed with the China National Intellectual Property Administration on February 14, 2023 and entitled "COMMUNICATION METHOD AND APPARATUS", and to Chinese Patent Application No. 202310163334.X, filed with the China National Intellectual Property Administration on February 17, 2023 and entitled "COMMUNICATION METHOD AND APPARATUS", both of which are incorporated herein by reference in their entireties.

### TECHNICAL FIELD

This application relates to the field of communication technologies, and more specifically, to a communication method and apparatus.

### BACKGROUND

A terminal device may receive a wake-up signal through a separate low-power small circuit, for example, a wake-up receiver (wake-up receiver, WUR), and a main receiver may be in a sleep state. After the terminal device detects the wake-up signal through the WUR, the terminal device triggers wake-up of the main receiver. After the main receiver is woken up, the terminal device may perform, through the main receiver, a paging (paging) receiving process, for example, receive a paging message.

However, currently, utilization of resources used for transmitting the wake-up signal is not high, and is affected by many factors. Therefore, how to improve the utilization of the resources used for transmitting the wake-up signal is a technical problem to be urgently resolved currently.

### SUMMARY

This application provides a communication method and apparatus, to improve utilization of resources used for transmitting a wake-up signal.

According to a first aspect, a communication method is provided. The method includes: A first terminal device determines first information, where the first information indicates a quantity of first resources used by the first terminal device to monitor a first signal, and the first signal is used for waking up the first terminal device; and the first terminal device monitors the first signal based on the first information.

For example, that the first terminal device determines the first information includes: The first terminal device determines the first information based on an indication of a network device, that is, the network device sends the first information to the first terminal device. For another example, that the first terminal device determines the first information includes: The first terminal device determines the first information by itself, that is, the first terminal device determines the first information without an indication of a network device.

In a possible implementation, that the first terminal device monitors the first signal based on the first information may be: The first terminal device monitors the first signal based on the quantity of first resources indicated by the first information.

It may be understood that the foregoing monitoring includes meanings such as receiving and processing, to be specific, the first terminal device receives the first signal and processes the first signal, for example, performs demodulation. Optionally, the monitoring may further include an alternative expression, for example, detection or receiving.

Specifically, the first terminal device monitors the first signal based on the quantity of first resources indicated by the first information, to avoid a waste of resources used for transmitting the first signal, and improve utilization of the resources used for transmitting the first signal. For example, when quality of a channel between the terminal device and the network device is high, the first information indicates a small quantity of first resources. In this way, the utilization of the resources used for transmitting the first signal can be improved.

In a possible implementation, the first information includes a first transmission level, and the first transmission level corresponds to the quantity of first resources.

Specifically, the first transmission level indicates a value of a transmission level of the first signal, that is, the value of the transmission level of the first signal is the first transmission level. For example, the first transmission level is 2.

A mapping relationship between a transmission level and the quantity of first resources is established (where the mapping relationship may be predefined in a protocol or indicated by the network device to the terminal device, and this is not limited thereto), so that signaling overheads used to indicate the quantity of first resources can be reduced. Specifically, the first terminal device may determine, based on the first transmission level and the mapping relationship between the transmission level and the quantity of first resources, the quantity of first resources used for monitoring the first signal.

In a possible implementation, the first signal includes the first transmission level.

The first signal carries the first transmission level, so that false detection of the first terminal device on the first signal can be avoided. For example, the first terminal device compares a transmission level carried in the first signal with a transmission level indicated by the first information, and if determining that the transmission level carried in the first signal and the transmission level indicated by the first information are consistent, determines that a receiving object of the first signal is the first terminal device, or if determining that the transmission level carried in the first signal and the transmission level indicated by the first information are inconsistent, the first terminal device determines that the receiving object of the first signal is not the first terminal device, and may discard the first signal.

In a possible implementation, the first information further indicates a first time period, and that the first terminal device monitors the first signal based on the first information includes: The first terminal device monitors the first signal in the first time period based on the first information.

In this way, the first terminal device can be prevented from monitoring the first signal for a long period of time.

In a possible implementation, the first resource corresponds to at least one of a first frequency domain resource and a first time domain resource.

Specifically, in this application, a correspondence between a transmission level and a quantity of resources can be established in respect of a time domain resource. A frequency domain resource associated with the time domain resource is preconfigured or predefined, and does not need to be indicated by the network device to the first terminal device by using the first information. In addition, in this application, a correspondence between a transmission level and a quantity of resources can alternatively be established in respect of a frequency domain resource. A time domain resource associated with the frequency domain resource is preconfigured or predefined, and does not need to be indicated by the network device to the first terminal device by using the first information. It may be understood that, in this application, a correspondence between a transmission level and a quantity of resources can alternatively be jointly established in respect of a time domain resource and a frequency domain resource.

In a possible implementation, the first resource corresponds to the first frequency domain resource. The method further includes: The first terminal device sends second information to a network device, where the second information indicates that the first terminal device supports transmission level adjustment.

The first terminal device indicates, to the network device by using the second information, that the first terminal device supports transmission level adjustment, so that the network device can dynamically indicate the transmission level to the first terminal device.

In a possible implementation, the first resource corresponds to the first frequency domain resource. A value of a second transmission level is N times a value of the first transmission level. The second transmission level corresponds to a quantity of second frequency domain resources. The second frequency domain resource is used for sending the first signal. The first signal sent on the second frequency domain resource is N repeated transmissions of the first signal received on the first frequency domain resource. N is a positive integer. The quantity of second frequency domain resources is greater than or equal to N times a quantity of first frequency domain resources.

Specifically, when a gap exists between frequency domain resources, the quantity of second frequency domain resources is greater than N times the quantity of first frequency domain resources; or when no gap exists between frequency domain resources, the quantity of second frequency domain resources is equal to N times the quantity of first frequency domain resources.

Specifically, when the network device sends the first signal by using the second frequency domain resource corresponding to the second transmission level, and the first terminal device receives or monitors the first signal by using the first frequency domain resource corresponding to the first transmission level, repeated transmission on the frequency domain resource is defined, so that the first terminal device can receive the complete first signal, and false detection of the first terminal device on the first signal can be avoided.

In a possible implementation, the first resource corresponds to the first time domain resource. A value of a third transmission level is N times a value of the first transmission level. The third transmission level corresponds to a quantity of second time domain resources. The second time domain resource is used for sending the first signal. The first signal sent on the second time domain resource is N repeated transmissions of the first signal received on the first time domain resource. N is a positive integer. The quantity of second time domain resources is N times a quantity of first time domain resources.

Specifically, when the network device sends the first signal by using the second time domain resource corresponding to the third transmission level, and the first terminal device receives or monitors the first signal by using the first time domain resource corresponding to the first transmission level, repeated transmission on the time domain resource is defined, so that the first terminal device can receive the complete first signal, and false detection of the first terminal device on the first signal can be avoided.

In a possible implementation, that the first terminal device determines the first information includes: The first terminal device receives the first information from the network device, where the first information further indicates the first terminal device to monitor the first signal.

In this way, the network device can flexibly schedule the quantity of first resources used by the first terminal device to monitor the first signal, to improve the utilization of the resources used for transmitting the first signal.

In a possible implementation, the first terminal device includes a first module and a second module. The first signal is used for waking up the first module. The method further includes: The first module receives a second signal from the network device, where the second signal is used for measurement; the first module performs measurement on the second signal and obtains a first measurement report; and the first module sends a second measurement report to the network device, where the second measurement report is determined by the first module based on the first measurement report and a first mapping relationship.

It may be understood that the second measurement report and the first measurement report meet the first mapping relationship. When the first module obtains the first measurement report by measuring the second signal, the first module obtains the second measurement report based on the first mapping relationship and the first measurement report, and reports the second measurement report to the network device. The second measurement report is used by the network device to determine quality of a channel between the network device and the second module. When it is determined that the quality of the channel between the network device and the second module is high, the network device indicates a small quantity of first resources to the first terminal device. In this way, utilization of resources used for transmitting the first signal can be improved.

It may be understood that there is an association relationship between the second measurement report and the first information.

Optionally, the first module may report the first measurement report to the network device, and then the network device determines the second measurement report based on the first measurement report and the first mapping relationship. In this way, power consumption of the first terminal device can be reduced (to be specific, the first terminal device does not need to determine the second measurement report based on the first measurement report and the first mapping relationship).

In a possible implementation, the second measurement report includes channel state information between the second module and the network device, and the channel state information is related to the first information.

In this way, the network device determines the first information based on the channel state information between the network device and the second module that is included in the second measurement report, and delivers the first information to the first module of the first terminal device. Correspondingly, the second module monitors the first signal by using the quantity of first resources indicated by the first information.

In a possible implementation, the first terminal device includes a first module and a second module. The first signal is used for waking up the first module. The method further includes: The second module receives a third signal from the network device, where the third signal is used for measurement; the second module performs measurement on the third signal and obtains a third measurement report; and the first module sends the third measurement report to the network device.

Specifically, the second module may receive the third signal from the network device via a wake-up link, and obtain the third measurement report based on the measurement on the third signal. Correspondingly, the first module reports the third measurement report to the network device. The third measurement report is used by the network device to determine quality of a channel between the network device and the second module. When it is determined that the quality of the channel between the network device and the second module is high, the network device indicates a small quantity of first resources to the first terminal device. In this way, utilization of resources used for transmitting the first signal can be improved.

In a possible implementation, the third measurement report includes channel state information between the second module and the network device, and the channel state information is related to the first information.

In this way, the network device can determine the first information based on the channel state information between the network device and the second module that is included in the third measurement report, and deliver the first information to the first module of the first terminal device. Correspondingly, the second module monitors the first signal by using the quantity of first resources indicated by the first information.

In a possible implementation, the first terminal device includes a first module and a second module. The first signal is used for waking up the first module. The method further includes: The first module receives a fourth signal from the network device, where the fourth signal is used for measurement; the first module performs measurement on the fourth signal and obtains a fourth measurement report; and the first module determines a fifth measurement report based on the fourth measurement report and a second mapping relationship.

It may be understood that the fifth measurement report and the fourth measurement report meet the second mapping relationship. When the first module obtains the fourth measurement report by measuring the fourth signal, the first module obtains the fifth measurement report based on the second mapping relationship and the fourth measurement report. The fifth measurement report is used by the first terminal device to determine quality of a channel between the network device and the second module. When it is determined that the quality of the channel between the network device and the second module is high, the first terminal device may use a small quantity of first resources based on the fifth measurement report. In this way, utilization of resources used for transmitting the first signal can be improved.

In a possible implementation, the fifth measurement report includes channel state information between the second module and the network device, and the channel state information is related to the first information.

In this way, the first terminal device determines the first information based on the channel state information between the network device and the second module that is included in the fifth measurement report. Correspondingly, the second module monitors the first signal by using the quantity of first resources indicated by the first information.

In a possible implementation, the first terminal device includes a first module and a second module. The first signal is used for waking up the first module. The method further includes: The second module receives a fifth signal from the network device, where the fifth signal is used for measurement; and the second module performs measurement on the fifth signal and obtains a sixth measurement report.

Specifically, the second module receives the fifth signal from the network device via a wake-up link, and obtains the sixth measurement report based on the measurement on the fifth signal. The sixth measurement report is used by the first terminal device to determine quality of a channel between the network device and the second module. When it is determined that the quality of the channel between the network device and the second module is high, the first terminal device may use a small quantity of first resources based on the sixth measurement report. In this way, utilization of resources used for transmitting the first signal can be improved.

In a possible implementation, the sixth measurement report includes channel state information between the second module and the network device, and the channel state information is related to the first information.

In this way, the first terminal device determines the first information based on the channel state information between the network device and the second module that is included in the sixth measurement report. Correspondingly, the second module monitors the first signal by using the quantity of first resources indicated by the first information.

According to a second aspect, a communication method is provided. The method includes: A network device determines first information, where the first information indicates a first terminal device to monitor a first signal, the first signal is used for waking up the first terminal device, and the first information further indicates a quantity of first resources used by the first terminal device to monitor the first signal; and the network device sends the first information to the first terminal device.

Specifically, the network device delivers the first information to the first terminal device, to indicate, to the first terminal device, the quantity of first resources used by the first terminal device to monitor the first signal, to avoid a waste of resources used for transmitting the first signal, and improve utilization of the resources used for transmitting the first signal. For example, when quality of a channel between the terminal device and the network device is high, the network device indicates a small quantity of first resources to the first terminal device by using the first information. In this way, the utilization of the resources used for transmitting the first signal can be improved.

In addition, the network device can flexibly schedule the quantity of first resources used by the first terminal device to monitor the first signal, to improve the utilization of the resources used for transmitting the first signal.

In a possible implementation, the first information includes a first transmission level, and the first transmission level corresponds to the quantity of first resources.

A mapping relationship between a transmission level and the quantity of first resources is established (where the mapping relationship may be predefined in a protocol or indicated by the network device to the terminal device, and this is not limited thereto), so that signaling overheads used to indicate the quantity of first resources can be reduced. Specifically, the first terminal device may determine, based on the first transmission level and the mapping relationship between the transmission level and the quantity of first resources, the quantity of first resources used for monitoring the first signal.

In a possible implementation, the first signal includes the first transmission level.

The first signal carries the first transmission level, so that false detection of the first terminal device on the first signal can be avoided. For example, the first terminal device compares a transmission level carried in the first signal with a transmission level indicated by the first information, and if determining that the transmission level carried in the first signal and the transmission level indicated by the first information are consistent, determines that a receiving object of the first signal is the first terminal device, or if determining that the transmission level carried in the first signal and the transmission level indicated by the first information are inconsistent, the first terminal device determines that the receiving object of the first signal is not the first terminal device, and may discard the first signal.

In a possible implementation, the first information further indicates a first time period, and the first time period is a time period in which the first terminal device monitors the first signal.

In this way, the first terminal device can be prevented from monitoring the first signal for a long period of time.

In a possible implementation, the first resource corresponds to at least one of a first frequency domain resource and a first time domain resource.

Specifically, in this application, a correspondence between a transmission level and a quantity of resources can be established in respect of a time domain resource. A frequency domain resource associated with the time domain resource is preconfigured or predefined, and does not need to be indicated by the network device to the first terminal device by using the first information.

In addition, in this application, a correspondence between a transmission level and a quantity of resources can alternatively be established in respect of a frequency domain resource. A time domain resource associated with the frequency domain resource is preconfigured or predefined, and does not need to be indicated by the network device to the first terminal device by using the first information.

It may be understood that, in this application, a correspondence between a transmission level and a quantity of resources can alternatively be jointly established in respect of a time domain resource and a frequency domain resource.

In a possible implementation, the first resource corresponds to the first frequency domain resource. The method further includes: The network device receives second information from the first terminal device, where the second information indicates that the first terminal device supports transmission level adjustment.

The network device may determine, by using the second information, that the first terminal device supports transmission level adjustment. In this way, the network device may dynamically indicate the transmission level to the first terminal device, to improve utilization of resources used for transmitting a wake-up signal.

In a possible implementation, the first resource corresponds to the first frequency domain resource. A value of the first transmission level is the same as a value of a second transmission level. The second transmission level corresponds to a quantity of second frequency domain resources. A gap exists between the first frequency domain resource and the second frequency domain resource. The second frequency domain resource is used by a second terminal device to monitor a second signal. The second signal is used for waking up the second terminal device. A quantity of first frequency domain resources is the same as the quantity of second frequency domain resources.

Specifically, a gap exists between frequency domain resources corresponding to transmission levels with a same value, so that in this application, interference between transmission of different wake-up signals can be avoided or reduced.

In a possible implementation, the first resource corresponds to the first frequency domain resource. A value of a third transmission level is N times the value of the first transmission level. The third transmission level corresponds to a quantity of third frequency domain resources. The third frequency domain resource is used for sending the first signal. The first signal sent on the third frequency domain resource is N repeated transmissions of the first signal received on the first frequency domain resource. N is a positive integer. The quantity of third frequency domain resources is greater than or equal to N times the quantity of first frequency domain resources.

Specifically, when the network device sends the first signal by using the third frequency domain resource corresponding to the third transmission level, and the first terminal device receives or monitors the first signal by using the first frequency domain resource corresponding to the first transmission level, repeated transmission on the frequency domain resource is defined, so that the first terminal device can receive the complete first signal, and false detection of the first terminal device on the first signal can be avoided.

In a possible implementation, the first resource corresponds to the first time domain resource. A value of a fourth transmission level is N times a value of the first transmission level. The fourth transmission level corresponds to a quantity of second time domain resources. The second time domain resource is used for sending the first signal. The first signal sent on the second time domain resource is N repeated transmissions of the first signal received on the first time domain resource. N is a positive integer. The quantity of second time domain resources is N times a quantity of first time domain resources.

Specifically, when the network device sends the first signal by using the second time domain resource corresponding to the fourth transmission level, and the first terminal device receives or monitors the first signal by using the first time domain resource corresponding to the first transmission level, repeated transmission on the time domain resource is defined, so that the first terminal device can receive the complete first signal, and false detection of the first terminal device on the first signal can be avoided.

In a possible implementation, the first terminal device includes a first module and a second module. The first signal is used for waking up the first module. The method further includes: The network device sends a third signal to the first module, where the third signal is used for measurement; and the network device receives a second measurement report from the first module, where the second measurement report is determined by the first module based on a first measurement report and a first mapping relationship, and the first measurement report is obtained by the first module through measurement on the third signal.

It may be understood that the second measurement report and the first measurement report meet the first mapping relationship. When the first module obtains the first measurement report by measuring the second signal, the first module obtains the second measurement report based on the first mapping relationship and the first measurement report, and reports the second measurement report to the network device. The second measurement report is used by the network device to determine quality of a channel between the network device and the second module. When it is determined that the quality of the channel between the network device and the second module is high, the network device indicates a small quantity of first resources to the first terminal device. In this way, utilization of resources used for transmitting the first signal can be improved.

Optionally, the network device may receive the first measurement report from the first module, and then determine the second measurement report based on the first measurement report and the first mapping relationship. In this way, power consumption of the first terminal device can be reduced (to be specific, the first terminal device does not need to determine the second measurement report based on the first measurement report and the first mapping relationship).

In a possible implementation, the second measurement report includes channel state information between the second module and the network device, and the channel state information is related to the first information.

In this way, the network device determines the first information based on the channel state information between the network device and the second module that is included in the second measurement report, and delivers the first information to the first module of the first terminal device. Correspondingly, the second module monitors the first signal by using the quantity of first resources indicated by the first information.

In a possible implementation, the first terminal device includes a first module and a second module. The first signal is used for waking up the first module. The method further includes: The network device sends a fourth signal to the second module, where the fourth signal is used for measurement; and the network device receives a third measurement report from the first module, where the third measurement report is obtained by the second module through measurement on the fourth signal.

In a possible implementation, the third measurement report includes channel state information between the second module and the network device, and the channel state information is related to the first information.

According to a third aspect, a communication apparatus is provided. The communication apparatus may be used in the terminal device in the first aspect. The communication apparatus may be the terminal device, an apparatus (for example, a chip, a chip system, or a circuit) in the terminal device, or an apparatus that can be used in combination with the terminal device.

In a possible implementation, the terminal device may include modules or units that one-to-one correspond to the methods/operations/steps/actions described in the first aspect. The module or unit may be implemented by a hardware circuit, software, or a hardware circuit in combination with software.

In a possible implementation, the terminal device includes a processing unit, configured to determine first information, where the first information indicates a quantity of first resources used by the communication apparatus to monitor a first signal, and the first signal is used for waking up the communication apparatus. The processing unit is further configured to monitor the first signal based on the first information.

In a possible implementation, the first information includes a first transmission level, and the first transmission level corresponds to the quantity of first resources.

In a possible implementation, the first signal includes the first transmission level.

In a possible implementation, the first information further indicates a first time period, and the processing unit is further configured to monitor the first signal in the first time period based on the first information.

In a possible implementation, the first resource corresponds to at least one of a first frequency domain resource and a first time domain resource.

In a possible implementation, the first resource corresponds to the first frequency domain resource. The communication apparatus further includes a transceiver unit. The transceiver unit is configured to send second information to a network device, where the second information indicates that the communication apparatus supports transmission level adjustment.

In a possible implementation, the first resource corresponds to the first frequency domain resource. A value of a second transmission level is N times a value of the first transmission level. The second transmission level corresponds to a quantity of second frequency domain resources. The second frequency domain resource is used for sending the first signal. The first signal sent on the second frequency domain resource is N repeated transmissions of the first signal received on the first frequency domain resource. N is a positive integer. The quantity of second frequency domain resources is greater than or equal to N times a quantity of first frequency domain resources.

In a possible implementation, the first resource corresponds to the first time domain resource. A value of a third transmission level is N times a value of the first transmission level. The third transmission level corresponds to a quantity of second time domain resources. The second time domain resource is used for sending the first signal. The first signal sent on the second time domain resource is N repeated transmissions of the first signal received on the first time domain resource. N is a positive integer. The quantity of second time domain resources is N times a quantity of first time domain resources.

In a possible implementation, the communication apparatus further includes a transceiver unit. The transceiver unit is configured to receive the first information from the network device. The first information further indicates the communication apparatus to monitor the first signal.

In a possible implementation, the transceiver unit is further configured to receive a second signal from the network device, where the second signal is used for measurement. The processing unit is configured to perform measurement on the second signal and obtain a first measurement report. The transceiver unit is further configured to send a second measurement report to the network device, where the second measurement report is determined by the processing unit based on the first measurement report and a first mapping relationship.

In a possible implementation, the second measurement report includes channel state information between the communication apparatus and the network device, and the channel state information is related to the first information.

In a possible implementation, the transceiver unit is further configured to receive a third signal from the network device, where the third signal is used for measurement. The processing unit is further configured to perform measurement on the third signal and obtain a third measurement report. The transceiver unit is further configured to send the third measurement report to the network device.

In a possible implementation, the third measurement report includes channel state information between the communication apparatus and the network device, and the channel state information is related to the first information.

In a possible implementation, the transceiver unit is further configured to receive a fourth signal from the network device, where the fourth signal is used for measurement. The processing unit is further configured to perform measurement on the fourth signal and obtain a fourth measurement report. The processing unit is further configured to determine a fifth measurement report based on the fourth measurement report and a second mapping relationship.

In a possible implementation, the fifth measurement report includes channel state information between the communication apparatus and the network device, and the channel state information is related to the first information.

In a possible implementation, the transceiver unit is further configured to receive a fifth signal from the network device, where the fifth signal is used for measurement. The processing unit is further configured to perform measurement on the fifth signal and obtain a sixth measurement report.

In a possible implementation, the sixth measurement report includes channel state information between the communication apparatus and the network device, and the channel state information is related to the first information.

According to a fourth aspect, a communication apparatus is provided. The communication apparatus may be used in the network device in the second aspect. The communication apparatus may be the network device, an apparatus (for example, a chip, a chip system, or a circuit) in the network device, or an apparatus that can be used in combination with the network device.

In a possible implementation, the communication apparatus may include modules or units that one-to-one correspond to the methods/operations/steps/actions described in the second aspect. The module or unit may be implemented by a hardware circuit, software, or a hardware circuit in combination with software.

In a possible implementation, the communication apparatus includes: a processing unit, configured to determine first information, where the first information indicates a first terminal device to monitor a first signal, the first signal is used for waking up the first terminal device, and the first information further indicates a quantity of first resources used by the first terminal device to monitor the first signal; and a transceiver unit, configured to send the first information to the first terminal device.

In a possible implementation, the first information includes a first transmission level, and the first transmission level corresponds to the quantity of first resources.

In a possible implementation, the first signal includes the first transmission level.

In a possible implementation, the first information further indicates a first time period, and the first time period is a time period in which the first terminal device monitors the first signal.

In a possible implementation, the first resource corresponds to at least one of a first frequency domain resource and a first time domain resource.

In a possible implementation, the first resource corresponds to the first frequency domain resource. The transceiver unit is further configured to receive second information from the first terminal device, where the second information indicates that the first terminal device supports transmission level adjustment.

In a possible implementation, the first resource corresponds to the first frequency domain resource. A value of the first transmission level is the same as a value of a second transmission level. The second transmission level corresponds to a quantity of second frequency domain resources. A gap exists between the first frequency domain resource and the second frequency domain resource. The second frequency domain resource is used by a second terminal device to monitor a second signal. The second signal is used for waking up the second terminal device. A quantity of first frequency domain resources is the same as the quantity of second frequency domain resources.

In a possible implementation, the first resource corresponds to the first frequency domain resource. A value of a third transmission level is N times the value of the first transmission level. The third transmission level corresponds to a quantity of third frequency domain resources. The third frequency domain resource is used for sending the first signal. The first signal sent on the third frequency domain resource is N repeated transmissions of the first signal received on the first frequency domain resource. N is a positive integer. The quantity of third frequency domain resources is greater than or equal to N times the quantity of first frequency domain resources.

In a possible implementation, the first resource corresponds to the first time domain resource. A value of a fourth transmission level is N times a value of the first transmission level. The fourth transmission level corresponds to a quantity of second time domain resources. The second time domain resource is used for sending the first signal. The first signal sent on the second time domain resource is N repeated transmissions of the first signal received on the first time domain resource. N is a positive integer. The quantity of second time domain resources is N times a quantity of first time domain resources.

In a possible implementation, the first terminal device includes a first module and a second module. The first signal is used for waking up the first module. The transceiver unit is further configured to send a third signal to the first module, and the third signal is used for measurement. The transceiver unit is further configured to receive a second measurement report from the first module. The second measurement report is determined by the first module based on the first measurement report and a first mapping relationship, and the first measurement report is obtained by the first module through measurement on the third signal.

In a possible implementation, the second measurement report includes channel state information between the second module and the communication apparatus, and the channel state information is related to the first information.

In a possible implementation, the first terminal device includes a first module and a second module, the first signal is used for waking up the first module. The transceiver unit is further configured to send a fourth signal to the second module, and the fourth signal is used for measurement. The transceiver unit is further configured to receive a third measurement report from the first module, where the third measurement report is obtained by the second module through measurement on the fourth signal.

In a possible implementation, the third measurement report includes channel state information between the second module and the communication apparatus, and the channel state information is related to the first information.

According to a fifth aspect, a communication apparatus is provided, and includes a processor. The processor is configured to enable, by executing a computer program or instructions or through a logic circuit, the communication apparatus to perform the method according to any one of the first aspect and the possible implementations of the first aspect, or perform the method in any one of the second aspect and the possible implementations of the second aspect.

In a possible implementation, the communication apparatus further includes a memory, and the memory is configured to store the computer program or the instructions.

In a possible implementation, the communication apparatus further includes a communication interface, and the communication interface is configured to input a signal and/or output a signal.

According to a sixth aspect, a communication apparatus is provided, and includes a logic circuit and an input/output interface. The input/output interface is configured to input a signal and/or output a signal. The logic circuit is configured to perform the method according to any one of the first aspect and the possible implementations of the first aspect, or the logic circuit is configured to perform the method according to any one of the second aspect and the possible implementations of the second aspect.

According to a seventh aspect, a computer-readable storage medium is provided, and includes a computer program or instructions. When the computer program or the instructions are run on a computer, the method according to any one of the first aspect and the possible implementations of the first aspect is performed, or the method according to any one of the second aspect and the possible implementations of the second aspect is performed.

According to an eighth aspect, a computer program product is provided, and includes instructions. When the instructions are run on a computer, the method according to any one of the first aspect and the possible implementations of the first aspect is performed, or the method according to any one of the second aspect and the possible implementations of the second aspect is performed.

According to a ninth aspect, a communication system is provided, and includes a terminal device and a network device. The terminal device is configured to perform the method according to any one of the first aspect and the possible implementations of the first aspect, and the network device is configured to perform the method according to any one of the second aspect and the possible implementations of the second aspect.

For descriptions of beneficial effects of the third aspect to the ninth aspect, refer to the descriptions of beneficial effects of the first aspect and the second aspect. Details are not described herein again.

### BRIEF DESCRIPTION OF DRAWINGS

FIG. 1 is a diagram of a communication system 100 to which an embodiment of this application is applicable;
FIG. 2 is a diagram in which a terminal device receives a wake-up signal through a second module;
FIG. 3 is a diagram of a waveform of a wake-up signal using OOK modulation;
FIG. 4 is a diagram of a waveform of a wake-up signal using FSK modulation;
FIG. 5 is a schematic interaction flowchart of a communication method 500 according to an embodiment of this application;
FIG. 6 is a diagram of a relationship between a transmission level and a frequency domain resource according to an embodiment of this application;
FIG. 7 is a diagram of a relationship between a transmission level and a time domain resource according to an embodiment of this application;
FIG. 8 is a diagram of repeated transmission according to an embodiment of this application;
FIG. 9 is a diagram of transmission of a wake-up signal according to an embodiment of this application;
FIG. 10 is a schematic interaction flowchart of a communication method 1000 according to an embodiment of this application;
FIG. 11 is a schematic interaction flowchart of a communication method 1100 according to an embodiment of this application;
FIG. 12 is a block diagram of a communication apparatus 1200 according to an embodiment of this application;
FIG. 13 is a block diagram of a communication apparatus 1300 according to an embodiment of this application;
FIG. 14 is a block diagram of a communication apparatus 1400 according to an embodiment of this application;
FIG. 15 is a block diagram of a communication apparatus 1500 according to an embodiment of this application; and
FIG. 16 is a block diagram of a communication apparatus 1600 according to an embodiment of this application.

### DESCRIPTION OF EMBODIMENTS

The following describes technical solutions of this application with reference to the accompanying drawings.

The technical solutions in this application may be applied to various communication systems, for example, a long term evolution (long term evolution, LTE) system, an LTE frequency division duplex (frequency division duplex, FDD) system, an LTE time division duplex (time division duplex, TDD) system, a universal mobile telecommunications system (universal mobile telecommunications system, UMTS), a 5^{th} generation (5^{th} generation, 5G) system or a new radio (new radio, NR), an evolved system after 5G like a 6^{th} generation (6^{th} generation, 6G) system, or a non-terrestrial communication network (non-terrestrial network, NTN) system like an inter-satellite communication system and a satellite communication system. The satellite communication system includes a satellite base station and a terminal device. The satellite base station provides a communication service for the terminal device. The satellite base station may also communicate with a terrestrial base station. A satellite may be used as a base station, or may be used as a terminal device. The satellite may be a non-terrestrial base station, a non-terrestrial device, or the like, for example, an uncrewed aerial vehicle, a hot air balloon, a low earth orbit satellite, a medium earth orbit satellite, or a high earth orbit satellite.

The technical solutions in this application are applicable to both a homogeneous network scenario and a heterogeneous network scenario. In addition, a transmission point is not limited. Coordinated multipoint transmission may be performed between macro base stations, between micro base stations, and between a macro base station and a micro base station. The technical solutions in this application are applicable to an FDD system/a TDD system. The technical solutions in this application are applicable to not only a low-frequency scenario (sub 6G), but also a high-frequency scenario (above 6 GHz), terahertz, optical communication, and the like. The technical solutions in this application are applicable to not only communication between a network device and a terminal, but also communication between network devices, communication between terminals, communication in the internet of vehicles, communication in the internet of things, communication in the industrial internet, and the like.

The technical solutions in this application may also be applied to a scenario in which the terminal is connected to a single base station. A base station connected to the terminal and a core network (core network, CN) connected to the base station are in a same standard. For example, if the CN is a 5G core, the base station is correspondingly a 5G base station, and the 5G base station is directly connected to the 5G core. Alternatively, if the CN is a 6G core, the base station is a 6G base station, and the 6G base station is directly connected to the 6G core. The technical solutions in this application are also applicable to a dual connectivity (dual connectivity, DC) scenario in which the terminal is connected to at least two base stations.

The technical solutions in this application are also applicable to a macro-micro scenario including different forms of base stations in a communication network. For example, the base station may be a satellite, an air balloon station, or an uncrewed aerial vehicle station. The technical solutions in this application are also applicable to a scenario in which both a wide-coverage base station and a small-coverage base station exist.

The technical solutions in this application may be applied to a scenario in which there is a high-reliability service requirement, for example, a port scenario, an industrial manufacturing scenario, a transportation scenario, or a coal mine scenario.

The technical solutions in this application may be further applied to 5.5G, 6G, and later wireless communication systems. Application scenarios include but are not limited to scenarios such as terrestrial cellular communication, an NTN, satellite communication, high altitude platform station (high altitude platform station, HAPS) communication, vehicle-to-everything (vehicle-to-everything, V2X), integrated access and backhaul (integrated access and backhaul, IAB), and reconfigurable intelligent surface (reconfigurable intelligent surface, RIS) communication.

The terminal in this application may be a device having wireless sending and receiving functions, and may be user equipment (user equipment, UE), an access terminal, a subscriber unit (subscriber unit), a subscriber station, a mobile station (mobile station), a remote station, a remote terminal, a mobile device, a user terminal, a wireless communication device, a user agent, or a user apparatus. The terminal device may alternatively be a satellite phone, a cellular phone, a smartphone, a wireless data card, a wireless modem, or a machine-type communication device, or may be a cordless phone, a session initiation protocol (session initiation protocol, SIP) phone, a wireless local loop (wireless local loop, WLL) station, a personal digital assistant (personal digital assistant, PDA), customer-premises equipment (customer-premises equipment, CPE), a smart point of sale (point of sale, POS) machine, a handheld device having a wireless communication function, a computing device or another processing device connected to a wireless modem, a vehicle-mounted device, a communication device carried on a high-altitude aircraft, a wearable device, an uncrewed aerial vehicle, a robot, a terminal in device-to-device (device-to-device, D2D) communication, a terminal in V2X, a virtual reality (virtual reality, VR) terminal device, an augmented reality (augmented reality, AR) terminal device, a wireless terminal in industrial control (industrial control), a wireless terminal in self-driving (self-driving), a wireless terminal in telemedicine (remote medical), a wireless terminal in a smart grid (smart grid), a wireless terminal in transportation safety (transportation safety), a wireless terminal in a smart city (smart city), a wireless terminal in a smart home (smart home), a terminal device in an evolved communication network after 5G, or the like. This is not limited in this application.

In this application, a communication apparatus configured to implement a function of the terminal device may be the terminal device, or may be an apparatus that can support the terminal device in implementing the function, for example, a chip system. The apparatus may be mounted in the terminal device or used in cooperation with the terminal device. In this application, the chip system may include a chip, or may include a chip and another discrete device.

The network device in this application is a device having wireless sending and receiving functions, and is configured to communicate with the terminal device. The access network device may be a node in a radio access network (radio access network, RAN), and may be referred to as a base station, or may be referred to as a RAN node. The access network device may be an evolved NodeB (evolved NodeB, eNB or eNodeB) in LTE, a base station in a 5G network like a gNodeB (gNB), a base station in an evolved public land mobile network (public land mobile network, PLMN) after 5G, a broadband network gateway (broadband network gateway, BNG), an aggregation switch, the 3^{rd} generation partnership project (3^{rd} generation partnership project, 3GPP) access device, or the like. For example, the RAN may be configured as a RAN, an open radio access network (open radio access network, O-RAN), or a cloud access network (cloud radio access network, C-RAN) defined in the 3GPP protocol.

The network device in this application may further include base stations in various forms, for example, a macro base station, a micro base station (also referred to as a small cell), a relay station, a transmission point (transmission and reception point, TRP), a transmitting point (transmitting point, TP), a mobile switching center, and a device that functions as a base station in device-to-device (device-to-device, D2D), vehicle-to-everything (vehicle-to-everything, V2X), and machine-to-machine (machine-to-machine, M2M) communication, and a network device in the NTN communication system. This is not specifically limited in this application.

The network device in this application may further include a network element or a module that implements some functions of the base station, for example, include one or more of the following: a central unit (central unit, CU), a distributed unit (distributed unit, DU), or a radio unit (radio unit, RU). Optionally, the CU may be further divided into a CU-control plane (control plane, CP) and a CU-user plane (user plane, UP). Functions of the CU and the DU may be implemented by different network elements, or may be implemented by a baseband unit (baseband unit, BBU) of the base station. A function of the RU may be implemented by a radio frequency device of the base station. For example, the radio frequency device of the base station may be a radio frequency remote processing unit (remote radio unit, RRU), a pico radio frequency remote unit (pico remote radio unit, pRRU), an active antenna processing unit (active antenna unit, AAU), or another unit, module, or device having a radio frequency processing function. A communication interface protocol between the BBU and the radio frequency device may be a common public radio interface (common public radio interface, CPRI) interface protocol, an enhanced common public radio interface (enhanced common public radio interface, eCPRI) interface protocol, a fronthaul interface protocol between a DU and an RU in an O-RAN system, or the like. This is not limited.

In this application, an apparatus configured to implement a function of the network device may be the network device, or may be an apparatus that can support the network device in implementing the function, for example, a chip system. The apparatus may be mounted in the network device or used in cooperation with the network device. In embodiments of this application, the chip system may include a chip, or may include a chip and another discrete device.

The following first describes an example of a communication system to which an embodiment of this application is applicable.

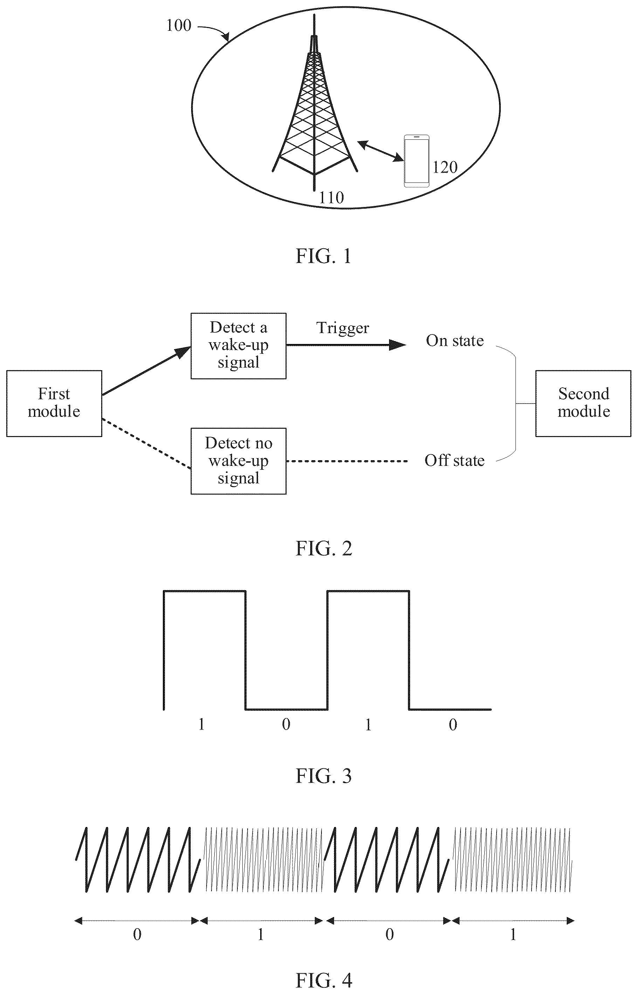

FIG. 1 is a diagram of a communication system 100 to which an embodiment of this application is applicable. As shown in FIG. 1, the communication system 100 includes a network device 110 and a terminal device 120. It may be understood that quantities of terminal devices and network devices in the communication system 100 are not limited in this application. The terminal device 120 may be any terminal device listed above, and the network device 110 may be any network device listed above. This is not limited thereto. As shown in FIG. 1, when the network device 110 communicates with the terminal device 120, the network device 110 manages one or more cells, and each cell may include one or more terminal devices.

In a possible implementation, the network device 110 and the terminal device 120 form a single-cell communication system. Without loss of generality, a cell may be denoted as a cell 1. The network device 110 may be a network device in the cell 1, or the network device 110 may serve a terminal device (for example, the terminal device 120) in the cell 1. This is not limited thereto.

Optionally, the cell may be further understood as an area within coverage of a wireless signal of the network device 110.

The following briefly describes technical content related to the technical solutions of this application.

Generally, regardless of whether the terminal device 120 performs a paging receiving procedure when the terminal device 120 is in an idle (idle) state/inactive (inactive) state, or receives data when the terminal device 120 is in a connected state, the terminal device 120 uses a same receiving module (or receiver or receiver circuit). In this application, a module that completes these functions (or performs related steps) may be referred to as a first module. It may be understood that the first module is merely named for differentiation, and a specific name of the first module does not limit the protection scope of this application. For example, the first module may alternatively be a first circuit or a main circuit. For ease of description, the first module is uniformly used for description below.

A process in which the terminal device 120 receives a signal through the first module may be referred to as a process in which a signal is transmitted on a link (which may be denoted as a first link for differentiation). The first link represents a connection relationship between the terminal device 120 and the network device 110, and is a logical concept rather than a physical entity. The first link may also be referred to as a main link. For ease of description, the first link is uniformly used for description below.

It may be understood that, power consumption of performing, by the terminal device 120, the paging receiving procedure through the first module is high. For example, the terminal device 120 first uses a receiving module of the first module to receive a downlink signal, then performs blind detection on a physical downlink control channel (physical downlink control channel, PDCCH), and finally performs decoding and the like on a received physical downlink shared channel (physical downlink shared channel, PDSCH). All these cause high power consumption. In addition, because a circuit structure of the first module is complex, reference power consumption of the first module during operation is also high.

To reduce high power consumption caused when the terminal device 120 performs the paging receiving procedure through the first module, the terminal device 120 may use a separate low-power small circuit to receive a wake-up signal (wake-up signal/radio, WUS/WUR). The wake-up signal indicates paging-related information, and the paging-related information may include a paged terminal device or a paged terminal device group. The low-power small circuit may be implemented by using a separate small circuit or chip with a simple structure, so that power consumption of the low-power small circuit is low.

In a possible implementation, the low-power small circuit may alternatively be a wake-up receiver (wake-up receiver, WUR), a wake-up circuit, a low-power circuit, or the like. A specific name of the low-power small circuit is not limited in this application. In this application, the low-power small circuit may be referred to as a second module. It may be understood that the second module is merely named for differentiation, and a specific name of the second module does not limit the protection scope of this application. For example, the second module may alternatively be a second circuit or a wake-up circuit. For ease of description, the low-power small circuit is uniformly described as the second module below.

Similarly, a process in which the terminal device 120 receives a signal through the second module may be referred to as a process in which a signal is transmitted on a link (which is denoted as a second link for differentiation). The second link represents a connection relationship between the terminal device 120 and the network device 110, and is a logical concept rather than a physical entity. It should be understood that the wake-up signal is merely an example name, and a name thereof is not limited in this application. In addition, for descriptions of receiving the wake-up signal by the terminal device 120 through the second module, refer to FIG. 2.

FIG. 2 is a diagram in which a terminal device receives a wake-up signal through a second module. As shown in FIG. 2, when the terminal device detects the wake-up signal through the second module, the wake-up signal may include paging-related indication information. Specifically, the terminal device 120 receives a signal through the second module. If the terminal device 120 cannot detect a wake-up signal associated with the terminal device 120, the terminal device 120 continues receiving a signal through the second module, and the first module may be in an off state (or a sleep state); or if the terminal device 120 detects a wake-up signal associated with the terminal device 120, the terminal device 120 triggers wake-up of the first module, that is, enables the first module to be in/switched to an on state (or referred to as a working state, or referred to as an active state). After the first module is enabled, the terminal device 120 performs a paging receiving procedure, for example, receives a paging PDCCH, and receives a paging PDSCH after detecting the paging PDCCH on a corresponding paging occasion (paging occasion, PO). Alternatively, after the first module is enabled, the terminal device 120 performs a PDCCH monitoring procedure. The monitored PDCCH may be a PDCCH used to schedule data transmission, for example, a PDCCH carrying any one of the following downlink control information (downlink control information, DCI): a DCI format 0_0, DCI format 0_1, DCI format 0_2, DCI format 1_0, DCI format 1_1, a DCI format 1_2, and the like.

In an example, to ensure a power consumption gain, the wake-up signal may be modulated through on-off keying (on-off keying, OOK) or frequency-shift keying (frequency-shift keying, FSK), and a corresponding wake-up circuit may receive a wake-up signal by using an envelope detection method. For details, refer to FIG. 3 and FIG. 4.

FIG. 3 is a diagram of a waveform of a wake-up signal using OOK modulation. As shown in FIG. 3, when OOK modulation is used for a wake-up signal, each bit (namely, an encoded bit) corresponds to one symbol (symbol). Similarly, a symbol may also be referred to as a chip (chip), or may be referred to as another name. This is not limited herein. When the bit is 1, a signal is sent in a length of the symbol (that is, signal transmit power is not 0 in the length of the symbol). When the bit is 0, no signal is sent in a length of the symbol (that is, signal transmit power is 0 in the length of the symbol). As shown in FIG. 3, the waveform shown in FIG. 3 may represent four bits 1010.

FIG. 4 is a diagram of a waveform of a wake-up signal using FSK modulation. As shown in FIG. 4, when FSK modulation is used for a wake-up signal, different frequency resources are used for different information. For example, 2FSK carries 1-bit information. When an information bit is 0, information is sent on a frequency resource f0, and no information is sent on a frequency resource fl; or when an information bit is 1, information is sent on a frequency resource fl, and no information is sent on a frequency resource f0. It is assumed that f0<f1, and a waveform of an FSK signal whose information is 0101 is shown in FIG. 4. In a 1^{st} symbol and a 3^{rd} symbol, a frequency of the signal is low, and in a 2^{nd} symbol and a 4^{th} symbol, a frequency of the signal is high. When demodulating the signal, a receive end may compare power of f0 and f1 to determine whether sent information is 0 or 1.

In conclusion, when detecting the wake-up signal associated with the terminal device 120, the second module triggers to wake up the first module, that is, enables the first module to be in/switched to an on state.

Currently, utilization of resources used for transmitting the wake-up signal is not high, and is further affected by many factors. For example, quality of a channel between the terminal device (or the second module) and the network device affects the utilization of the resources used for transmitting the wake-up signal. For example, when a state of the channel between the terminal device and the network device is good, if a large quantity of resources are used to transmit the wake-up signal, low utilization of the resources is caused, and a resource waste is caused. Therefore, how to improve the utilization of the resources used for transmitting the wake-up signal is a technical problem to be urgently resolved currently.

In view of the foregoing technical problem, this application provides a communication method and apparatus, to improve the utilization of the resources used for transmitting the wake-up signal.

The following describes the communication method and apparatus in embodiments of this application with reference to the accompanying drawings.

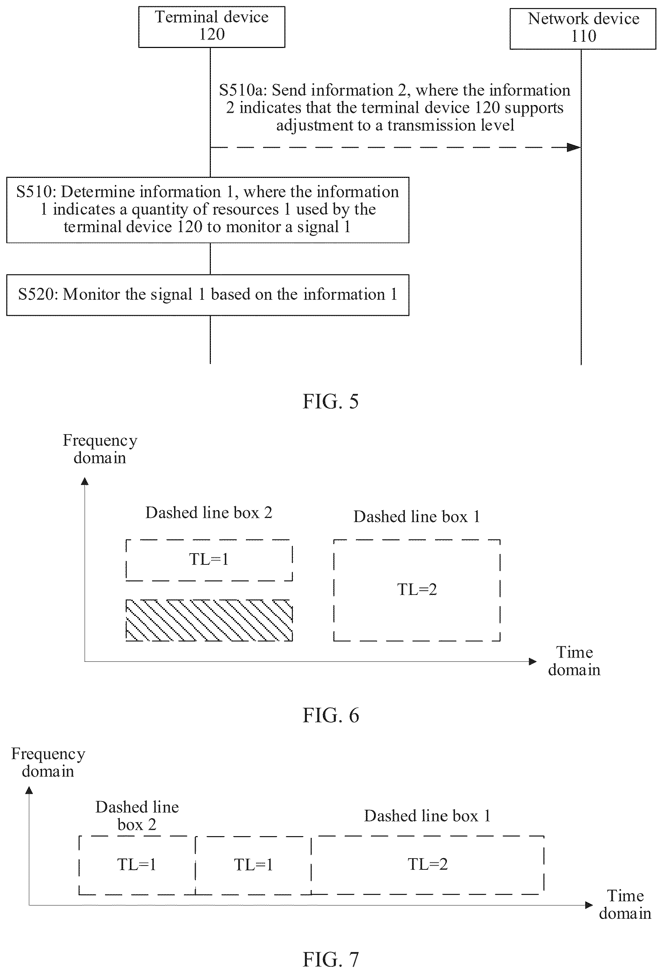

FIG. 5 is a schematic interaction flowchart of a communication method 500 according to an embodiment of this application. A method procedure in FIG. 5 may be performed by a terminal device 120 and a network device 110, or may be performed by modules and/or components (for example, chips or integrated circuits) that have corresponding functions and that are installed in the terminal device 120 and the network device 110. This is not limited in this application. The following uses the terminal device 120 and the network device 110 as an example for description. As shown in FIG. 5, the method 500 includes the following steps.

S510: The terminal device 120 determines information 1.

S520: The terminal device 120 monitors a signal 1 based on the information 1.

Specifically, the information 1 (for example, first information) may indicate a quantity of resources 1 (for example, first resources) used by the terminal device 120 (for example, a first terminal device) to monitor the signal 1 (for example, a first signal). Correspondingly, the terminal device 120 monitors the signal 1 based on the quantity of resources 1 that is indicated by the information 1. In other words, the terminal device 120 monitors the signal 1 by using the resources 1 of the quantity indicated by the information 1. Specifically, the quantity of resources 1 used by the terminal device 120 to monitor the signal 1 is indicated by the information 1. The signal 1 can be used for waking up the terminal device 120 (in other words, waking up a first module of the terminal device 120).

It may be understood that, that the terminal device 120 monitors the signal 1 based on the information 1 may be: The terminal device 120 receives the signal 1 based on the quantity of resources 1 that is indicated by the information 1, and performs processing, for example, decoding on the signal 1. Optionally, the "monitor" in S520 may have another alternative expression, for example, receive or detect. This is not limited thereto.

Specifically, the terminal device 120 monitors the signal 1 based on the quantity of resources 1 that is indicated by the information 1, to avoid a waste of resources used for transmitting the signal 1, and improve utilization of the resources used for transmitting the signal 1. For example, when quality of a channel between the terminal device 120 and the network device 110 is high, the information 1 indicates a small quantity of resources 1. In this way, the utilization of resources used for transmitting the signal 1 can be improved.

In a possible implementation, that the terminal device 120 determines the information 1 in S510 may be: The terminal device 120 receives the information 1 from the network device 110, where the information 1 further indicates the terminal device 120 to monitor the signal 1. That the information 1 further indicates the terminal device 120 to monitor the signal 1 may be: The information 1 is further used to configure the terminal device 120 to monitor the signal 1.

For example, the information 1 is radio resource control (radio resource control, RRC) signaling. In this case, the information 1 is not only used to configure the terminal device 120 to monitor the signal 1, but also indicates the quantity of resources 1 used when the terminal device 120 monitors the signal 1. In this case, that the information 1 configures the terminal device 120 to monitor the signal 1 may be: The information 1 is used for configuring related parameters of the signal 1, so that the terminal device 120 monitors the signal 1 based on these parameters.

For example, the information 1 is DCI or a media access control-control element (media access control-control element, MAC CE). In this case, the information 1 indicates the terminal device 120 to start to monitor the signal 1, and further indicates the quantity of resources 1 used when the terminal device 120 monitors the signal 1. When the information 1 is the DCI or the MAC CE, optionally, the terminal device 120 further receives RRC signaling before receiving the information 1. The RRC signaling is used for configuring related parameters of the signal 1. To be specific, the terminal device 120 first receives the related parameters of the signal 1, and does not immediately start to monitor the signal 1 after receiving the related parameters, but starts to monitor the signal 1 after receiving an indication of the information 1.

In conclusion, the network device 110 indicates, to the terminal device 120, the quantity of resources 1 used by the terminal device 120 to monitor the signal 1. In this way, the terminal device 120 monitors the signal 1 based on an indication of the network device 110, so that the network device 110 schedules the terminal device 120. In this way, the network device 110 can flexibly schedule the quantity of resources 1 used by the terminal device 120 to monitor the signal 1, to improve the utilization of the resources used for transmitting the signal 1.

In a possible implementation, that the terminal device 120 determines the information 1 in S510 may alternatively be: The terminal device 120 determines the information 1 by itself. In an example, the terminal device 120 measures the quality of the channel between the terminal device 120 (or a second module of the terminal device 120) and the network device 110, and flexibly adjusts, based on a measurement result, the quantity of resources 1 used for monitoring the signal 1. In this way, flexibility of adjusting, by the terminal device 120, the quantity of resources 1 used for monitoring the signal 1 can be enhanced. For details, refer to the following descriptions. Details are not described herein.

In a possible implementation, the resource 1 corresponds to at least one of a time domain resource 1 and a frequency domain resource 1. For example, the resource 1 corresponds to the time domain resource 1, or the resource 1 corresponds to the frequency domain resource 1, or the resource 1 corresponds to the time domain resource 1 and the frequency domain resource 1. For example, the resource 1 may be the time domain resource 1, or may be the frequency domain resource 1, or may be the time domain resource 1 and the frequency domain resource 1. When the resource 1 is the time domain resource 1, a frequency domain resource associated with the time domain resource 1 is preconfigured or predefined, and does not need to be indicated by the network device 110 to the terminal device 120 by using the information 1. When the resource 1 is the frequency domain resource 1, a time domain resource associated with the frequency domain resource 1 is preconfigured or predefined, and does not need to be indicated by the network device 110 to the terminal device 120 by using the information 1.

For example, the time domain resource 1 may include a time unit like a symbol, a slot, a subframe, or a frame. When the quantity of resources 1 is a quantity of time domain resources 1, the quantity of resources 1 may be represented as any one of a quantity of symbols, a quantity of slots, a quantity of subframes, a quantity of frames, or the like. This is not limited thereto. The frequency domain resource 1 may include a frequency domain unit like a resource element (resource element, RE), a resource block (resource block, RB), or a physical resource block (physical resource block, PRB). When the quantity of resources 1 is a quantity of frequency domain resources 1, the quantity of resources 1 may be represented as a quantity of REs, RBs, or PRBs. This is not limited thereto. When the resource 1 is a combination of the time domain resource 1 and the frequency domain resource 1, the resource 1 may be represented as a combination of a time unit and a frequency domain unit. For examples of the time unit and the frequency domain unit, refer to the foregoing descriptions. Details are not described herein again.

In a possible implementation, the quantity of resources 1 may be alternatively expressed as a size (size) of the resource 1, or a dimension of the resource 1. This is not limited thereto.

In a possible implementation, that the information 1 indicates the quantity of resources 1 used by the terminal device 120 to monitor the signal 1 may be: The information 1 directly indicates the quantity of resources 1 used for monitoring the signal 1. For example, the information 1 includes a number indicating the quantity of resources 1. That the information 1 indicates the quantity of resources 1 used by the terminal device 120 to monitor the signal 1 may alternatively be: The information 1 includes a first transmission level (transmission level, TL), and the first transmission level corresponds to the quantity of resources 1. It may be understood that the first TL included in the information 1 may be a transmission level or a transmission class of the signal 1, and different transmission levels or transmission classes of the signal 1 correspond to different quantities of resources 1.

It may be understood that transmission levels with different values correspond to different quantities of resources 1. For example, when the resource 1 is the time domain resource 1, when a value of the transmission level is 1, the time domain resource 1 represents one symbol, and when a value of the transmission level is 2, the time domain resource 1 is represented as two symbols. Alternatively, when the resource 1 is the frequency domain resource 1, when a value of the transmission level is 1, the frequency domain resource 1 may be represented as one RB, and when a value of the transmission level is 2, the frequency domain resource 1 may be represented as two RBs. This is not limited thereto.

It may be understood that when transmission levels with different values meet a multiple relationship, quantities of resources 1 corresponding to the transmission levels also meet a multiple relationship. For example, a quantity of resources 1 corresponding to a transmission level with a value 2 is twice a quantity of resources 1 corresponding to a transmission level with a value 1, and a quantity of resources 1 corresponding to a transmission level with a value 4 is four times the quantity of resources 1 corresponding to the transmission level with the value 1, and is also two times the quantity of resources 1 corresponding to the transmission level with the value 2.

In conclusion, the first transmission level included in the information 1 corresponds to the quantity of resources 1. The terminal device 120 may determine, based on the first transmission level, the quantity of resources 1 used for monitoring the signal 1. In an example, a mapping relationship between a transmission level and the quantity of resources 1 may be established, and the terminal device 120 may determine the quantity of resources 1 based on the mapping relationship and a specific value of the first transmission level. In this way, signaling overheads used to indicate the quantity of resources 1 can be reduced. For specific descriptions of the transmission level, refer to FIG. 6 and FIG. 7. Optionally, the mapping relationship between the first transmission level and the quantity of resources 1 that are included in the information 1 may be predefined.

It may be understood that the transmission level may be indicated by using a number or a letter, and a meaning of each number or letter may be predefined.

In conclusion, the mapping relationship between the transmission level and the quantity of resources 1 is established (where the mapping relationship may be predefined in a protocol or indicated by the network device 110 to the terminal device 120, and this is not limited thereto), so that signaling overheads used to indicate the quantity of resources 1 can be reduced. Specifically, the terminal device 120 may determine, based on the first transmission level and the mapping relationship between the first transmission level and the quantity of resources 1, the quantity of resources 1 used for monitoring the signal 1.

FIG. 6 is a diagram of a correspondence between a transmission level and a frequency domain resource according to an embodiment of this application. As shown in FIG. 6, an example in which a transmission level corresponds to a frequency domain resource is used. For a quantity of frequency domain resources corresponding to a transmission level with a value 2, refer to a dashed line box 1. For a quantity of frequency domain resources corresponding to a transmission level with a value 1, refer to a dashed line box 2. It may be understood that transmission levels with different values correspond to different quantities of frequency domain resources, but quantities of time domain resources corresponding to the transmission levels are the same. FIG. 6 is used as an example. For example, a time domain resource corresponding to the transmission level with the value 1 is two symbols (not shown in FIG. 6), and a time domain resource corresponding to the transmission level with the value 2 is also two symbols (not shown in FIG. 6). Optionally, time domain resources corresponding to transmission levels with different values may alternatively be different. This is not limited thereto.

In FIG. 6, when values of transmission levels corresponding to different wake-up signals are the same, a gap (gap) exists between frequency domain resources corresponding to the wake-up signals, and the gap is used to reduce or avoid interference between wake-up signal transmission. For example, a gap exists between a frequency domain resource (refer to a dashed line box 2) that corresponds to a transmission level with a value 1 and that corresponds to a signal 1 and a frequency domain resource (which may be used by a terminal device 130 (not shown in FIG. 1) to monitor a signal 2, where the signal 2 is used for waking up the terminal device 130) that corresponds to a transmission level with a value 1 and that corresponds to the signal 2 (refer to a twill texture box).

In FIG. 6, a frequency domain resource corresponding to a transmission level with a value 2 is greater than a sum of two frequency domain resources corresponding to transmission levels with values 1. Further, the frequency domain resource corresponding to the transmission level with the value 2 is equal to a sum of the following: two frequency domain resources corresponding to transmission levels with values 1 and a frequency domain resource corresponding to a gap. Similarly, a frequency domain resource corresponding to a transmission level with a value 4 is greater than a sum of four frequency domain resources corresponding to transmission levels with values 1. Further, the frequency domain resource corresponding to the transmission level being 4 is equal to a sum of the following: a sum of four frequency domain resources corresponding to transmission levels with values 1 and frequency domain resources respectively corresponding to three gaps.

Optionally, when no gap exists between frequency domain resources, a quantity of frequency domain resources corresponding to the transmission level with the value 2 is twice a quantity of frequency domain resources corresponding to the transmission level with the value 1. When a gap exists between frequency domain resources, a quantity of frequency domain resources corresponding to the transmission level with the value 2 is greater than twice a quantity of frequency domain resources corresponding to the transmission level with the value 1.

Optionally, in a possible implementation, when the transmission level corresponds to the frequency domain resource 1, the method 500 may further include the following step.

S510a: The terminal device 120 sends information 2 to the network device 110, where the information 2 indicates, to the network device 110, that the terminal device 120 supports transmission level adjustment. That the terminal device 120 supports transmission level adjustment may alternatively be equivalently described as that the terminal device 120 supports a plurality of transmission levels. This is not limited thereto.

Specifically, before the terminal device 120 receives the information 1 from the network device 110, the terminal device 120 may first send the information 2 to the network device 110, to indicate, to the network device 110, that the terminal device 120 supports transmission level adjustment, so that the network device 110 indicates an appropriate transmission level to the terminal device 120, to improve the utilization of the resources used for transmitting the signal 1. In conclusion, the terminal device 120 indicates, to the network device 110 by using the information 1, that the terminal device 120 supports transmission level adjustment, so that the network device 110 dynamically indicates the transmission level to the terminal device 120.

It may be understood that S510a is performed before S510.

FIG. 7 is a diagram of a correspondence between a transmission level and a time domain resource according to an embodiment of this application. As shown in FIG. 7, an example in which a transmission level corresponds to a time domain resource is used. For a quantity of time domain resources corresponding to a transmission level with a value 2, refer to a dashed line box 1. For a quantity of time domain resources corresponding to a transmission level with a value 1, refer to a dashed line box 2. It may be understood that transmission levels with different values respectively correspond to different quantities of time domain resources, but correspond to a same quantity of frequency domain resources. FIG. 7 is used as an example. A frequency domain resource corresponding to a transmission level with a value 1 is a bandwidth 1 (not shown in FIG. 7), and a frequency domain resource corresponding to a transmission level with a value 2 is also a bandwidth 1 (not shown in FIG. 7). Optionally, frequency domain resources respectively corresponding to transmission levels with different values may alternatively be different. This is not limited thereto.

In FIG. 7, when values of transmission levels corresponding to different wake-up signals are the same, quantities of time domain resources corresponding to the different wake-up signals are consistent. For example, if a value of a transmission level corresponding to a signal 1 is 1 (refer to the dashed line box 1), and a value of a transmission level corresponding to a signal 2 is also 1 (refer to a dashed line box next to the dashed line box 1), quantities of time domain resources corresponding to the signal 1 and the signal 2 are consistent.

In FIG. 7, when values of transmission levels corresponding to different wake-up signals meet a multiple relationship, quantities of time domain resources corresponding to the different wake-up signals also meet a multiple relationship. For example, when the value of the transmission level corresponding to the signal 1 is N times the value of the transmission level corresponding to the signal 2, a quantity of time domain resources corresponding to the signal 1 is N times a quantity of time domain resources corresponding to the signal 2.

In conclusion, the terminal device 120 determines, based on the information 1, a quantity of resources 1 used for monitoring the signal 1, so that a waste of the resources used for monitoring the signal 1 can be avoided. For example, when quality of a channel between the terminal device 120 and the network device 110 is high, the network device 110 indicates the terminal device 120 to use fewer resources to monitor the signal 1, or the terminal device 120 determines by itself to use fewer resources to monitor the signal 1. In this way, the utilization of the resources used for transmitting the signal 1 can be improved.

It may be understood that, that the terminal device 120 receives the information 1 from the network device 110 may be: The network device 110 sends the information 1 to the terminal device 120 via a main link. In other words, the information 1 is transmitted between the network device 110 and the first module of the terminal device 120, so that the second module of the terminal device 120 can monitor the signal 1 based on the information 1. Specifically, the network device 110 may use different signaling to deliver the information 1 to the terminal device 120 via the main link.

Manner 1: The network device 110 first configures, for the terminal device 120 by using RRC signaling, some basic parameters used to monitor the signal 1. After the configuration is completed, monitoring performed by the second module of the terminal device 120 on the signal 1 is in an inactive/a disabled/a not triggered state. In this case, the terminal device 120 may monitor a PDCCH based on an existing procedure. When the network device 110 considers that the terminal device 120 needs to monitor the signal 1 instead of the PDCCH to save energy, the network device 110 may activate/enable/trigger, by using dynamic signaling (which may be the information 1), for example, DCI or a MAC CE, the second module of the terminal device 120 to monitor the signal 1, and a transmission level used by the second module of the terminal device 120 to monitor the signal 1 may be included in the DCI or the MAC CE.

Optionally, in this application, the quantity of resources 1 used by the second module of the terminal device 120 to monitor the signal 1 can alternatively be directly indicated by using the DCI or the MAC CE.

Manner 2: The network device 110 configures, for the terminal device 120 by using RRC signaling (which may be the information 1), all parameters used to monitor the signal 1, where the parameters may include a transmission level A. In this case, after receiving the RRC signaling, the terminal device 120 starts to monitor the signal 1 by default. Alternatively, after the terminal device 120 receives the RRC signaling, monitoring of the signal 1 is in an inactive/a disabled/a not triggered state. After the terminal device 120 satisfies some conditions, the terminal device 120 starts to monitor the signal 1. For example, the "condition" may be that if the first module of the terminal device 120 receives no PDCCH within a period of time, the second module of the terminal device 120 starts to monitor the signal 1. In the two cases, the network device 110 does not need to explicitly activate/enable/trigger, by using signaling, the second module of the terminal device 120 to monitor the signal 1. In other words, the network device 110 first sends the information 1 to the terminal device 120, and the terminal device 120 starts to monitor the signal 1 after a period of time.

In a possible implementation, the information 1 may further indicate a time period A (for example, a first time period), and the second module monitors the signal 1 in the time period A. After the time period A ends, the terminal device 120 performs switching to the first module, that is, starts to monitor the PDCCH, instead of continuing monitoring the signal 1. In this way, the terminal device 120 can be prevented from monitoring the signal 1 for a long period of time.

Optionally, when the terminal device 120 determines the information 1 by itself, the time period A may be predefined in a protocol. In other words, when the terminal device 120 determines the information 1 by itself, a protocol may predefine time for the terminal device 120 to monitor the signal 1, to avoid that the terminal device 120 monitors the signal 1 for a long period of time.

Optionally, there is an association relationship between the time period A and the information 1. For example, when determining the information 1, the terminal device 120 may also determine the time period A.

In a possible implementation, that the terminal device 120 monitors the signal 1 based on the information 1 may be: The terminal device 120 continues receiving, in a period of time after sending channel state information (channel state information, CSI) to the network device 110, the information 1 including the first transmission level by using the first module. If the terminal device 120 receives a new transmission level, the terminal device 120 monitors the signal 1 by using a quantity of resources 1 corresponding to the new transmission level. If the terminal device 120 receives no new transmission level, the terminal device 120 monitors the signal 1 by using a quantity of resources 1 corresponding to an original transmission level.

In a possible implementation, that the terminal device 120 monitors the signal 1 based on the information 1 may alternatively be: After the network device 110 indicates, each time, the terminal device 120 (by using the DCI or the MAC CE) to start to monitor the signal 1, or after the terminal device 120 satisfies a condition and starts to monitor the signal 1, the second module of the terminal device 120 monitors the signal 1 only within a time range (for example, the time period A), and outside the time range, the terminal device 120 stops monitoring the signal 1, and returns to a first link to continue receiving the signal. The terminal device 120 may attempt to receive a new transmission level indication (namely, new information 1) after returning to the first link. The time range may be predefined in a protocol, or may be configured by the network device 110 (for example, configured by using the RRC signaling as a part of "parameters of the signal 1").

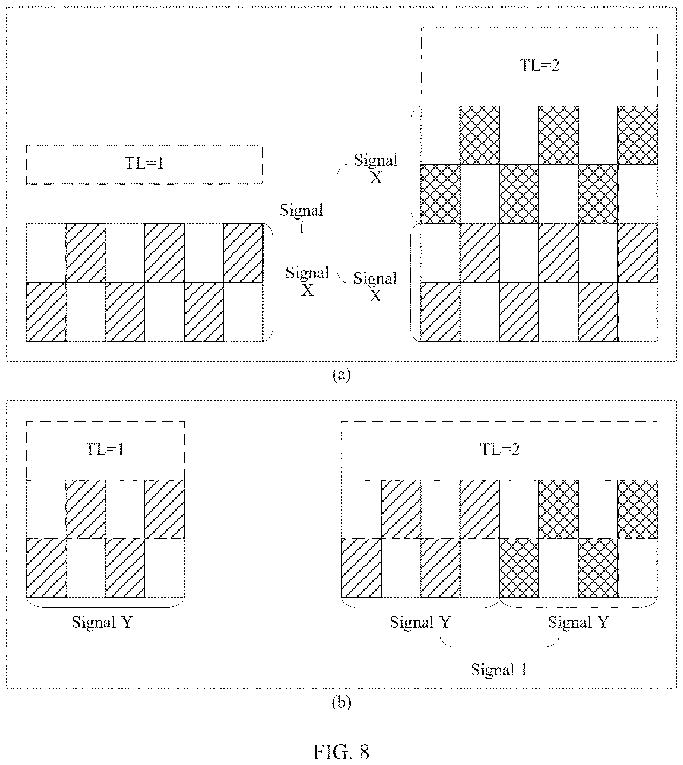

In this embodiment of this application, the quantity of resources used for monitoring the signal 1 may be different from the quantity of resources used for sending the signal 1. In other words, a value of a transmission level corresponding to the resource used for monitoring the signal 1 may be different from a value of a transmission level corresponding to the resource used for sending the signal 1. For example, the value of the transmission level corresponding to the resource used for sending the signal 1 is 4, and the value of the transmission level corresponding to the resource used for monitoring the signal 1 is 2. This may cause false detection of the terminal device 120. To resolve this problem, this application supports the following stipulation on a transmission level. To be specific, an example in which a transmission level corresponds to a frequency domain resource is used, and when a value of a transmission level A is N times a value of a transmission level B, the signal 1 sent on a frequency domain resource corresponding to the transmission level A is N repeated transmissions of the signal 1 received on a frequency domain resource corresponding to the transmission level B. Alternatively, an example in which the transmission level corresponds to a time domain resource is used, and when the value of the transmission level A is N times the value of the transmission level B, the signal 1 sent on a time domain resource corresponding to the transmission level A is N repeated transmissions of the signal 1 received on a time domain resource corresponding to the transmission level B. For details, refer to FIG. 8.

FIG. 8 is a diagram of repeated transmission according to an embodiment of this application. As shown in (a) in FIG. 8, an example in which a transmission level corresponds to a frequency domain resource, a signal 1 is modulated in an FSK manner, and N=2 is used. When a network device 110 sends the signal 1 by using a frequency domain resource corresponding to TL=2, the network device 110 may repeatedly transmit a signal X on the frequency domain resource corresponding to TL=2 to form the signal 1 (where the signal 1 includes two signals X). When a terminal device 120 receives the signal 1 by using a frequency domain resource corresponding to TL= 1, the signal 1 received by the terminal device 120 is complete (to be specific, only one signal X is received, and the other signal X is not received). Correspondingly, when the terminal device 120 demodulates the signal 1, the terminal device 120 may determine total energy at a 1^{st} frequency domain position and a 3^{rd} frequency domain position, determine total energy at a 2^{nd} frequency domain position and a 4^{th} frequency domain position, and compare the two pieces of total energy, to determine whether transmitted information is 0 or 1. Specifically, when the network device 110 sends the signal 1 by using a frequency domain resource corresponding to a second transmission level, the terminal device 120 receives or monitors the signal 1 by using a frequency domain resource corresponding to a first transmission level, and a value of the second transmission level is a multiple of a value of the first transmission level, repeated transmission on the frequency domain resource is defined, so that the terminal device 120 can receive the complete signal 1, and false detection of the terminal device 120 on the signal 1 can be avoided.

As shown in (b) in FIG. 8, an example in which a transmission level corresponds to a time domain resource, a signal 1 is modulated in an FSK manner, and N=2 is used. When the network device 110 sends the signal 1 by using a time domain resource corresponding to TL=2, the network device 110 may repeatedly transmit a signal Y on the time domain resource corresponding to TL=2 to form the signal 1 (where the signal 1 includes two signals Y). When the terminal device 120 receives the signal 1 by using a time domain resource corresponding to TL=1, the signal 1 received by the terminal device 120 is complete (to be specific, only one signal Y is received, and the other signal Y is not received). In other words, the terminal device 120 considers that a plurality of complete signals 1 of a smaller TL is received. Specifically, when the network device 110 sends the signal 1 by using a time domain resource corresponding to a third transmission level, the terminal device 120 receives or monitors the signal 1 by using the time domain resource corresponding to the first transmission level, and a value of the second transmission level is a multiple of the value of the first transmission level, repeated transmission on the time domain resource is defined, so that the terminal device 120 can receive the complete signal 1, and false detection of the terminal device 120 on the signal 1 can be avoided.

In a possible implementation, in (b) in FIG. 8, the signal 1 may alternatively be modulated by using OOK. OOK symbol lengths corresponding to signals 1 corresponding to values of different transmission levels are different, and a shorter OOK symbol length may be used for a wake-up signal corresponding to a transmission level with a smaller value. In this way, when information of a same size is transmitted, an effect that a total time domain length corresponding to a transmission level with a smaller value is shorter can also be achieved.

In a possible implementation, the signal 1 may also include the first transmission level. The terminal device 120 may determine whether a transmission level carried in the signal 1 is the same as a transmission level indicated by the information 1. If the transmission level carried in the signal 1 and the transmission level indicated by the information 1 are consistent, the terminal device 120 may continue processing the signal 1. If the transmission level carried in the signal 1 and the transmission level indicated by the information 1 are inconsistent, the terminal device 120 may discard the signal 1.

In conclusion, the first transmission level is carried in the signal 1, so that false detection of the terminal device 120 on the signal 1 can be avoided. For example, the terminal device 120 compares the transmission level carried in the signal 1 with the transmission level indicated by the information 1, and if determining that the transmission level carried in the signal 1 and the transmission level indicated by the information 1 are consistent, determines that a receiving object of the signal 1 is the terminal device 120; or if determining that the transmission level carried in the signal 1 and the transmission level indicated by the information 1 are inconsistent, the terminal device 120 determines that the receiving object of the signal 1 is not the terminal device 120, and may discard the signal 1. In this way, false detection of the terminal device 120 on the signal 1 can be avoided.

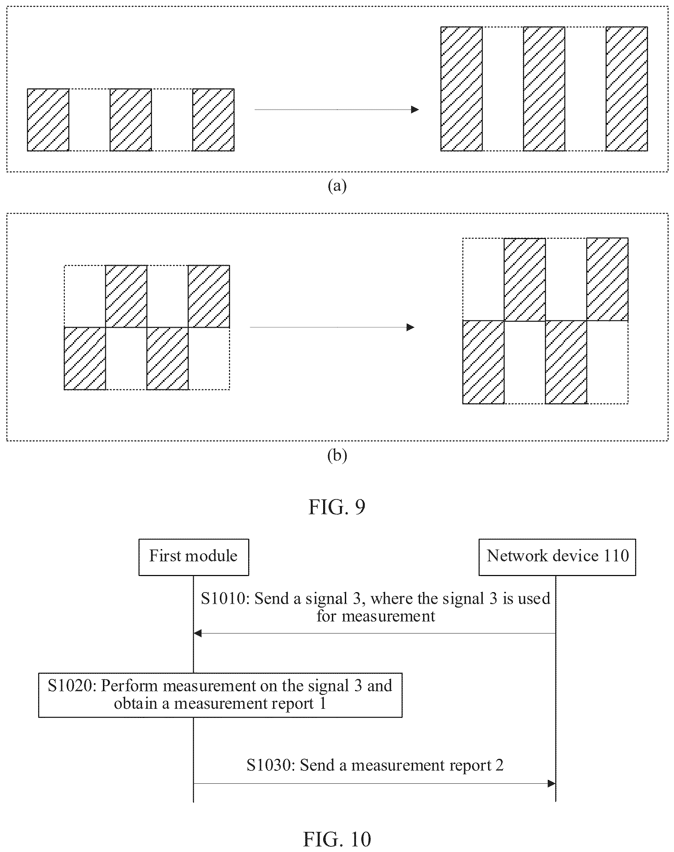

FIG. 9 is a diagram of transmission of a wake-up signal according to an embodiment of this application. As shown in (a) in FIG. 9, OOK modulation is performed on a signal 1 and a frequency domain resource corresponding to a transmission level. When a quantity of frequency domain resources used for transmitting the signal 1 changes, in this application, energy can be carried on more frequency domain resources on an ON symbol, to complete sending of the signal 1. As shown in (b) in FIG. 9, when FSK modulation is performed on a signal 1 and a frequency domain resource corresponding to a transmission level, when a size of a frequency domain resource used for transmitting the signal 1 changes, a frequency domain resource used for transmitting the signal 1 may be added. Specifically, sizes of frequency domain resources corresponding to information 0 and information 1 in the FSK modulation may be proportionally increased. When demodulating the signal 1, the terminal device 120 may compare relative values of energy of a frequency of an upper half band and energy of a frequency of a lower half band on an FSK symbol, to determine whether transmitted information is 0 or 1, so as to complete sending of the signal 1.

The following describes another communication method in embodiments of this application with reference to the accompanying drawings.

FIG. 10 is a schematic interaction flowchart of a communication method 1000 according to an embodiment of this application. The method procedure in FIG. 10 may be performed by a terminal device 120 and a network device 110, or may be performed by modules and/or components (for example, chips or integrated circuits) that have corresponding functions and that are installed in the terminal device 120 and the network device 110. This is not limited in this application. The following uses the terminal device 120 and the network device 110 as an example for description. As shown in FIG. 10, the method 1000 includes the following steps.

S1010: The network device 110 sends a signal 3 to a first module, where the signal 3 is used for measurement.

Correspondingly, the first module of the terminal device 120 receives the signal 3 from the network device 110.

Specifically, the signal 3 is used for measurement on a channel between the first module of the terminal device 120 and the network device 110.

S1020: The first module performs measurement on the signal 3 and obtains a measurement report 1.

Specifically, when the first module receives the signal 3 from the network device 110, the first module performs measurement on the signal 3 and obtains the measurement report 1. For a specific process in which the first module of the terminal device 120 performs measurement on the signal 3 and obtains the measurement report 1, refer to an existing standard. Details are not described herein.

S1030: The first module sends a measurement report 2 to the network device 110.

It may be understood that the measurement report 2 obtained by the first module through the measurement on the signal 3 can only be used to feed back channel state information between the first module and the network device 110, and cannot reflect channel state information between a second module and the network device 110. Therefore, the first module needs to translate the measurement report 1 into the measurement report 2, that is, convert the measurement report 1 into the measurement report 2 based on a mapping relationship between the measurement report 1 and the measurement report 2.

Further, the first module reports the measurement report 2 to the network device 110, so that the network device 110 determines a state of a channel between the network device 110 and the second module of the terminal device 120 based on the measurement report 2, and the network device 10 indicates, to the terminal device 120, a quantity of resources used for monitoring the signal 1, to improve utilization of resources used for transmitting the signal 1.

Specifically, after obtaining the measurement report 1, the first module determines the measurement report 2 based on a mapping relationship 1 between the measurement report 2 and the measurement report 1. The measurement report 2 is used to determine, to the network device 110, the state of the channel between the second module of the terminal device 120 and the network device 110, to determine information 1.

It may be understood that the measurement report 2 includes the channel state information between the second module and the network device 110, and the channel state information is associated with the information 1. For example, the network device 110 may determine the information 1 based on the channel state information in the measurement report 2, or the network device 110 determines the information 1 based on an intermediate parameter. The intermediate parameter is associated with the channel state information in the measurement report 2.

In an example, the measurement report 1 may perform an indication in a form of Table 1. For example, details are shown in Table 1.

**Table 1**

| CQI index | Modulation | Code rate x 1024 | Efficiency |
|---|---|---|---|
| 0 | | --- | |
| 1 | QPSK | 78 | 0.1523 |
| 2 | QPSK | 120 | 0.2344 |
| 3 | QPSK | 193 | 0.3770 |
| 4 | QPSK | 308 | 0.6016 |
| 5 | QPSK | 449 | 0.8770 |
| 6 | QPSK | 602 | 1.1758 |
| 7 | 16QAM | 378 | 1.4766 |
| 8 | 16QAM | 490 | 1.9141 |
| 9 | 16QAM | 616 | 2.4063 |
| 10 | 64QAM | 466 | 2.7305 |
| 11 | 64QAM | 567 | 3.3223 |
| 12 | 64QAM | 666 | 3.9023 |
| 13 | 64QAM | 772 | 4.5234 |
| 14 | 64QAM | 873 | 5.1152 |
| 15 | 64QAM | 948 | 5.5547 |

For example, each channel quality indicator (channel quality indicator, CQI) index in the measurement report 1 corresponds to parameters such as one modulation, one code rate, and efficiency. The measurement report 1 reported by the terminal device 120 to the network device 110 may include any CQI index in Table 1. The network device 110 determines the channel state information between the first module and the network device 110 based on Table 1 and the CQI index reported by the terminal device 120. As described above, the measurement report 1 can only be used to feed back the channel state information between the first module and the network device 110, and cannot be used to feed back the channel state information between the second module and the network device 110. Therefore, the terminal device 120 needs to determine the measurement report 2 based on the measurement report 1 and the mapping relationship 1 between the measurement report 1 and the measurement report 2. The measurement report 2 may also perform an indication in a form of Table 2. Details are shown in Table 2.

**Table 2**

| LP-CQI index | TL |
|---|---|
| 0 | 4 |
| 1 | 2 |
| 2 | 1 |
| 3 | Reserved |

For example, the measurement report 2 includes low power (low power, LP)-CQI indexes in Table 2, and each LP-CQI index corresponds to one transmission level. A mapping relationship (for example, the foregoing mapping relationship 1) exists between each LP-CQI index and the CQI index in Table 1. For example, a CQI index with a value 1 to a CQI index with a value 4 in Table 1 correspond to an LP-CQI index with a value 1 in Table 2. In this way, the network device 110 can determine the state of the channel between the second module and the network device 110.

Optionally, each LP-CQI index in Table 2 may be alternatively associated, in the form shown in Table 1, with some parameters used for representing the channel state information between the second module and the network device 110. This is not limited thereto.

Optionally, each LP-CQI in Table 2 may alternatively be associated with a quantity of resources of a specific size. For example, a larger value of the LP-CQI index indicates a larger quantity of associated resources; or a smaller value of the LP-CQI index indicates a smaller quantity of associated resources. This is not limited thereto.

It may be understood that the measurement report 2 may be an LP-CQI table. A mapping relationship may be established between the LP-CQI table and an existing CQI table. In this way, the network device 110 can determine the state of the channel between the second module and the network device 110.

It may be understood that the first module obtains the measurement report 2 based on the measurement report 1 and the mapping relationship 1 between the measurement report 1 and the measurement report 2, and reports the measurement report 2 to the network device 110. The measurement report 2 is used by the network device 110 to determine quality of the channel between the network device 110 and the second module. When it is determined that the quality of the channel between the network device 110 and the second module is high, the network device 110 indicates a small quantity of resources 1 to the terminal device 120. In this way, utilization of resources used for transmitting a wake-up signal can be improved.

Optionally, when the terminal device 120 determines the information 1 by itself, the terminal device 120 may not report the measurement report 2 to the network device 110.

Optionally, the first module reports the measurement report 1 to the network device 110, and the network device 110 determines the measurement report 2 based on the measurement report 1 and the mapping relationship 1 between the measurement report 1 and the measurement report 2 (where the mapping relationship may be predefined in a protocol), and determines the information 1 based on the measurement report 2. For example, the network device 110 may map a CQI index in the measurement report 1 to an LP-CQI index in the measurement report 2 based on the mapping relationship 1, to determine a transmission level or a quantity of resources used by the terminal device 120 to monitor the signal 1.

Optionally, the terminal device 120 sends the measurement report 2 via a PUCCH or a PUSCH of a main link. The terminal device 120 may separately send the measurement report 2, or may send the measurement report 2 together with a CSI measurement report. This is not limited thereto.

It may be understood that when the first module reports the measurement report 2 to the network device 110, the first module may perform an indication by using fewer bits, for example, report the measurement report 2 to the network device 120 by using two bits.

It should be noted that the foregoing descriptions about Table 2 are merely an example, and cannot be used as a final limitation.

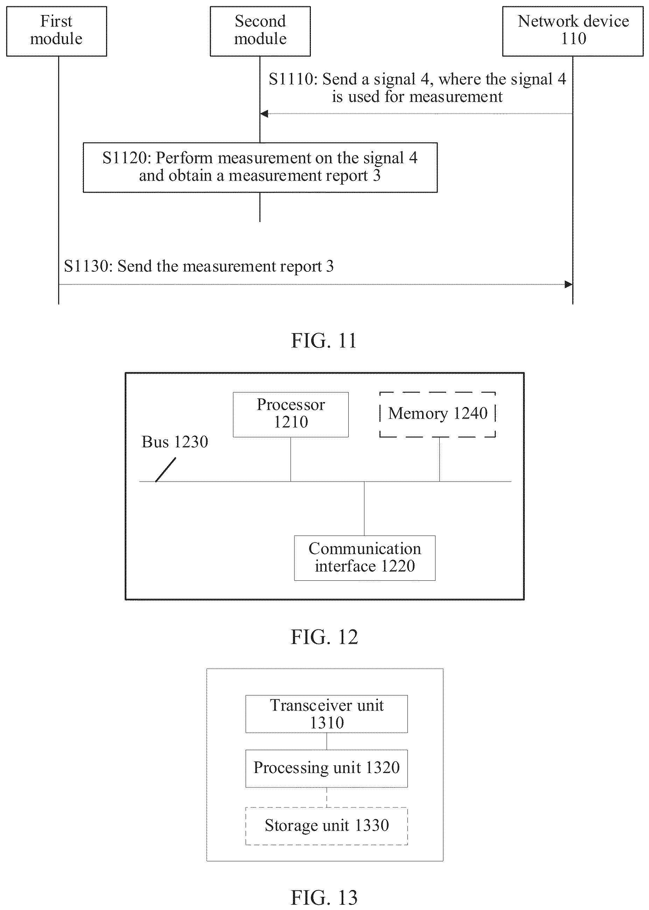

FIG. 11 is a schematic interaction flowchart of a communication method 1100 according to an embodiment of this application. The method procedure in FIG. 11 may be performed by a terminal device 120 and a network device 110, or may be performed by modules and/or components (for example, chips or integrated circuits) that have corresponding functions and that are installed in the terminal device 120 and the network device 110. This is not limited in this application. The following uses the terminal device 120 and the network device 110 as an example for description. As shown in FIG. 11, the method 1100 includes the following steps.

S1110: The network device 110 sends a signal 4 to a second module, where the signal 4 is used for measurement.

Correspondingly, the second module of the terminal device 120 receives the signal 4 from the network device 110.

It may be understood that the signal 4 is used for channel measurement between the second module and the network device 110.

Specifically, the second module of the terminal device 120 receives the signal 4 from the network device 110 via a wake-up link, and performs measurement on the signal 4.

It may be understood that a frequency domain resource used for sending a signal 1 may be further used for sending the signal 4 that may be named as, for example, a low power (low power, LP)-CSI-reference signal (reference signal, RS). A same modulation manner as the signal 1 may be used for the signal 4, for example, OOK modulation or FSK modulation. Configuration information of the signal 4 may be configured by the network device 110 for the terminal device 120 via a main link and by using RRC signaling. The configuration information may include a sending time position, a frequency position, a generation parameter, and the like of the signal 4.

S1120: The second module performs measurement on the signal 4 and obtains a measurement report 3.

Specifically, when the second module of the terminal device 120 receives the signal 4 from the network device 110, the second module performs measurement on the signal 4 and obtains a measurement report 3 of the signal 4 (for example, an LP-CSI report (a CSI report dedicated to the signal 1, including at least an LP-CQI)).

More specifically, the measurement report 3 may perform an indication in the form shown in Table 2 described above. For example, the measurement report 3 includes LP-CQI indexes in Table 2, and each LP-CQI index is associated with one transmission level.

Optionally, the LP-CQI index included in the measurement report 3 may alternatively be associated with some parameters used for representing channel state information between the second module and the network device 110. This is not limited thereto.

S1130: The first module sends the measurement report 3 to the network device 110.

Specifically, when the second module performs measurement on the signal 4 and obtains the measurement report 3, the measurement report 3 is used to feed back (or includes) the channel state information between the second module and the network device 110. The channel state information is associated with the foregoing information 1. For example, the network device 110 determines the information 1 based on the channel state information in the measurement report 3, or the network device 110 determines the information 1 based on an intermediate parameter. The intermediate parameter is associated with the channel state information in the measurement report 3.

Specifically, the second module receives the signal 4 from the network device 110, performs measurement on the signal 4, and obtains the measurement report 3. The second module transfers the measurement report 3 to the first module. Correspondingly, the first module reports the measurement report 3 to the network device 110. The measurement report 3 is used by the network device 110 to determine quality of the channel between the network device 110 and the second module. When it is determined that the quality of the channel between the network device 110 and the second module is high, the network device 110 indicates a small quantity of resources 1 to the terminal device 120. In this way, utilization of resources used for transmitting a wake-up signal can be improved.

Optionally, when the terminal device 120 determines the information 1 by itself, the terminal device 120 may not report the measurement report 3 to the network device 110.

Optionally, the terminal device 120 may send the measurement report 3 via a PUCCH or a PUSCH of the main link. In addition, the terminal device 120 may separately send the measurement report 3, or may send the measurement report 3 together with a CSI measurement report defined in an existing standard. This is not limited thereto.

In this embodiment of this application, in the method 1000 and the method 1100, for content related to the measurement report, refer to specific descriptions of the measurement report (or content such as the CQI) in the existing standard. Details are not described herein.

It should be noted that the technical solution in embodiments of this application may be applied to a scenario in which the terminal device 120 is in a connected state, to be specific, a quantity of resources used by the terminal device 120 in the connected state to monitor the signal 1 is indicated; or may be applied to a scenario in which the terminal device 120 is in a non-connected state. This is not limited thereto.

It may be understood that the method 1000 and the method 1100 may be associated with the method 500 separately. For example, for an association between the method 1000 and the method 500, the network device 110 may determine the information 1 by exchanging a measurement report between the network device 110 and the terminal device 120 described in the method 1000. For interaction between the method 1100 and the method 500, the network device 110 may determine the information 1 by exchanging a measurement report between the network device 110 and the terminal device 120 described in the method 1100. Similarly, if the terminal device 120 determines the information 1 by itself, the terminal device 120 may determine the information 1 by using the method 1000 or the method 1100. This is not limited thereto.

It may be understood that the method 1000 and the method 1100 may alternatively be used as independent solutions. Specifically, by using the method 1000 or the method 1100, the network device 110 can determine the channel state information between the network device 110 and the terminal device 120; or by using the method 1000 or the method 1100, the terminal device 120 can determine the channel state information between the network device 110 and the terminal device 120. Further, the channel state information may indicate or be used to schedule a resource used for transmitting the signal 1, to improve utilization of the resource used for transmitting the signal 1.

The foregoing describes the method embodiments in embodiments of this application, and the following describes corresponding apparatus embodiments.

To implement functions in the methods provided in this application, both the terminal and the network device may include a hardware structure and/or a software module, and implement functions in the form of the hardware structure, the software module, or a combination of the hardware structure and the software module. Whether a function in the foregoing functions is performed by using the hardware structure, the software module, or the combination of the hardware structure and the software module depends on particular application and design constraint conditions of the technical solutions.

FIG. 12 is a block diagram of a communication apparatus 1200 according to an embodiment of this application. The communication apparatus 1200 includes a processor 1210 and a communication interface 1220. The processor 1210 and the communication interface 1220 may be connected to each other through a bus 1230. The communication apparatus 1200 shown in FIG. 12 may be a network device 110, or may be a terminal device 120.

Optionally, the communication apparatus 1200 further includes a memory 1240.

The memory 1240 includes but is not limited to a random access memory (random access memory, RAM), a read-only memory (read-only memory, ROM), an erasable programmable read-only memory (erasable programmable read-only memory, EPROM), or a portable read-only memory (compact disc read-only memory, CD-ROM). The memory 1240 is configured to store related instructions and data.

The processor 1210 may be one or more central processing units (central processing units, CPUs). When the processor 1210 is one CPU, the CPU may be a single-core CPU, or may be a multi-core CPU.

When the communication apparatus 1200 is the terminal device 120, for example, the processor 1210 is configured to perform the following operation: receiving information 1 from the network device 110.

The foregoing content is merely used as an example for description. When the communication apparatus 1200 is the terminal device 120, the communication apparatus 1200 is responsible for performing the methods or steps related to the terminal device 120 in the foregoing method embodiments.

When the communication apparatus 1200 is the network device 110, for example, the processor 1210 is configured to perform the following operations: sending information 1, and the like.

The foregoing content is merely used as an example for description. When the communication apparatus 1200 is the network device 110, the communication apparatus 1200 is responsible for performing the methods or steps related to the network device 110 in the foregoing method embodiments.

The foregoing descriptions are merely an example for description. For specific content, refer to the content shown in the foregoing method embodiments. In addition, for implementation of operations in FIG. 12, refer to corresponding descriptions in the method embodiments shown in FIG. 5 to FIG. 11.

It should be noted that the processor or the like shown in the communication apparatus 1200 may be used as an internal structure of a first module of the terminal device 120, or may be used as an internal structure of a second module of the terminal device 120.

FIG. 13 is a block diagram of a communication apparatus 1300 according to an embodiment of this application. The communication apparatus 1300 may be the network device 110 or the terminal device 120 in the foregoing embodiments, or may be a chip or a module in the network device 110 or the terminal device 120, and is configured to implement the methods in the foregoing embodiments. The communication apparatus 1300 includes a transceiver unit 1310. The following describes the transceiver unit 1310 by using an example.

The transceiver unit 1310 may include a sending unit and a receiving unit that are respectively configured to implement a sending function or a receiving function in the foregoing method embodiments. The transceiver unit 1310 may further include a processing unit configured to implement a function other than the sending function or the receiving function.

When the communication apparatus 1300 is the terminal device 120, for example, the transceiver unit 1310 is configured to send information 2 to the network device 110.

Optionally, the communication apparatus 1300 may further include a processing unit 1320, configured to perform content related to steps such as processing and coordination of the terminal device 120. For example, the processing unit 1320 is configured to determine information 1.

Optionally, the communication apparatus 1300 further includes a storage unit 1330, and the storage unit 1330 is configured to store a program or code used for performing the foregoing methods.

The foregoing content is merely used as an example for description. When the communication apparatus 1300 is the terminal device 120, the communication apparatus 1300 is responsible for performing the method or steps related to the terminal device 120 in the foregoing method embodiments.

When the communication apparatus 1300 is the network device 110, for example, the transceiver unit 1310 is configured to send information 1 and the like.

Optionally, the communication apparatus 1300 may further include a processing unit 1320, configured to perform content related to steps such as processing and coordination of the network device 110. For example, the processing unit 1320 is configured to determine the information 1 and the like.

Optionally, the communication apparatus 1300 further includes a storage unit 1330, and the storage unit 1330 is configured to store a program or code used for performing the foregoing methods.

The foregoing content is merely used as an example for description. When the communication apparatus 1300 is the network device 110, the communication apparatus 1300 is responsible for performing the methods or steps related to the network device 110 in the foregoing method embodiments.

In addition, for implementation of operations in FIG. 13, refer to corresponding descriptions of the method shown in the foregoing embodiments. Details are not described herein again.

It should be noted that the transceiver unit or the like shown in the communication apparatus 1300 may be used as an internal structure of a first module of the terminal device 120, or may be used as an internal structure of a second module of the terminal device 120.

The apparatus embodiments shown in FIG. 12 and FIG. 13 are configured to implement the content described in the method embodiments in FIG. 5 to FIG. 11. Therefore, for specific execution steps and methods of the apparatuses shown in FIG. 12 and FIG. 13, refer to content described in the foregoing method embodiments.

It should be understood that the transceiver unit may include the sending unit and the receiving unit. The sending unit is configured to execute a sending action of the communication apparatus, and the receiving unit is configured to execute a receiving action of the communication apparatus. For ease of description, in this embodiment of this application, the sending unit and the receiving unit are combined into one transceiver unit. Unified descriptions are provided herein, and details are not described below.

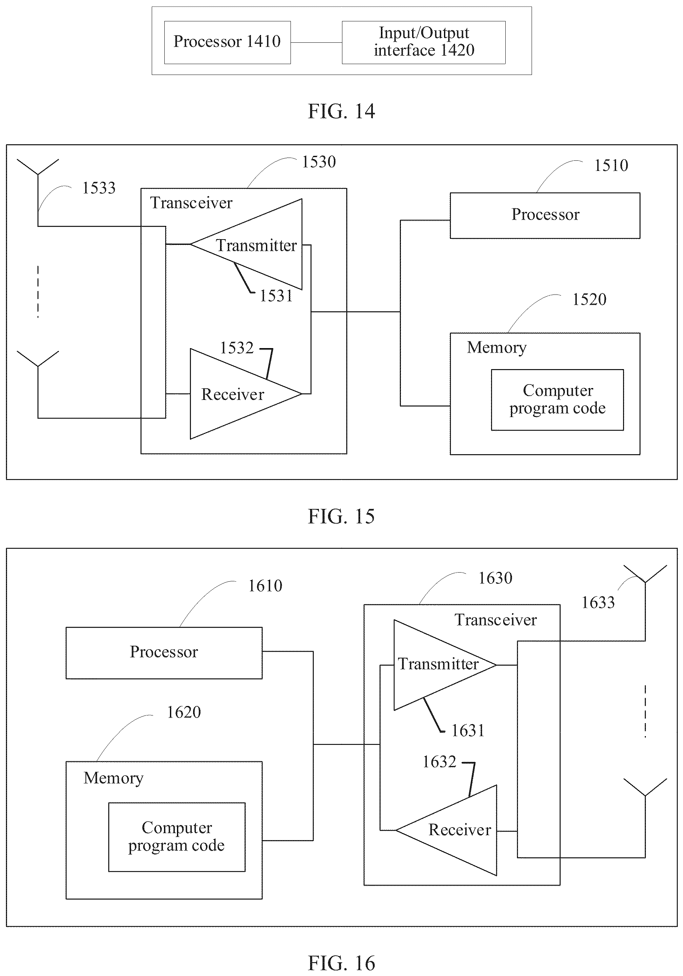

FIG. 14 is a block diagram of a communication apparatus 1400 according to an embodiment of this application. The communication apparatus 1400 may be configured to implement a function of the network device 110 or the terminal device 120 in the foregoing methods. The communication apparatus 1400 may be a chip in the network device 110 or the terminal device 120.

The communication apparatus 1400 includes an input/output interface 1420 and a processor 1410. The input/output interface 1420 may be an input/output circuit. The processor 1410 may be a signal processor, a chip, or another integrated circuit that can implement the methods in this application. The input/output interface 1420 is configured to input a signal or data or output a signal or data.

For example, when the communication apparatus 1400 is the terminal device 120, the input/output interface 1420 is configured to receive information 1 from the network device 110. The processor 1410 is configured to determine the information 1. The processor 1410 is further configured to perform some or all steps of any method provided in this application.

For example, when the communication apparatus 1400 is the network device 110, the input/output interface 1420 is configured to send information 1. The processor 1410 is configured to perform some or all steps of any method provided in this application.

In a possible implementation, the processor 1410 executes instructions stored in a memory, to implement a function implemented by a network device or a terminal device.

Optionally, the communication apparatus 1400 further includes the memory.

Optionally, the processor and the memory are integrated together.

Optionally, the memory is outside the communication apparatus 1400.

In a possible implementation, the processor 1410 may be a logic circuit, and the processor 1410 inputs a message or signaling/outputs a message or signaling through the input/output interface 1420. The logic circuit may be a signal processor, a chip, or another integrated circuit that can implement the methods in embodiments of this application.

The foregoing descriptions of the apparatus in FIG. 14 are merely an example. The apparatus can be configured to perform the methods in the foregoing embodiments. For specific content, refer to descriptions in the foregoing method embodiments. Details are not described herein again.

It should be noted that the processor or the like shown in the communication apparatus 1400 may be used as an internal structure of a first module of the terminal device 120, or may be used as an internal structure of a second module of the terminal device 120.

FIG. 15 is a block diagram of a communication apparatus 1500 according to an embodiment of this application. The communication apparatus 1500 may be a network device 110 or a chip. The communication apparatus 1500 may be configured to perform operations performed by the network device 110 in the method embodiments shown in FIG. 5 to FIG. 11.

When the communication apparatus 1500 is the network device 110, for example, a base station, FIG. 15 is a diagram of a simplified structure of the base station. The base station includes a part 1510, a part 1520, and a part 1530. The part 1510 is mainly configured to: perform baseband processing, control the base station, and the like. The part 1510 is usually a control center of the base station, may be usually referred to as a processor, and is configured to control the base station to perform a processing operation on a side of the network device in the foregoing method embodiments. The part 1520 is mainly configured to store computer program code and data. The part 1530 is mainly configured to receive and send a radio frequency signal, and perform conversion between the radio frequency signal and a baseband signal. The part 1530 may be usually referred to as a transceiver module, a transceiver machine, a transceiver circuit, a transceiver, or the like. A transceiver module in the part 1730 may also be referred to as a transceiver machine, a transceiver, or the like. The transceiver module includes an antenna 1533 and a radio frequency circuit (not shown in FIG. 15). The radio frequency circuit is mainly configured to perform radio frequency processing. Optionally, a component that is configured to implement a receiving function and that is in the part 1530 may be considered as a receiver, and a component that is configured to implement a sending function and that is in the part 1530 may be considered as a transmitter. In other words, the part 1530 includes a receiver 1532 and a transmitter 1531. The receiver may also be referred to as a receiving module, a receiver machine, a receiver circuit, or the like, and the transmitter may be referred to as a transmitting module, a transmitter machine, a transmitter circuit, or the like.

The part 1510 and the part 1520 may include one or more boards, and each board may include one or more processors and one or more memories. The processor is configured to read and execute a program in the memory, to implement a baseband processing function and control the base station. If there are a plurality of boards, the boards may be interconnected with each other to enhance a processing capability. In an optional implementation, the plurality of boards may share one or more processors, or the plurality of boards share one or more memories, or the plurality of boards share one or more processors at the same time.

For example, in an implementation, the transceiver module in the part 1530 is configured to perform a receiving and sending-related process performed by the network device in the embodiments shown in FIG. 5 to FIG. 11. The processor in the part 1510 is configured to perform a processing-related process performed by the network device in the embodiments shown in FIG. 5 to FIG. 11.

In another implementation, the processor in the part 1510 is configured to perform a processing-related process performed by a communication device in the embodiments shown in FIG. 5 to FIG. 11.

In another implementation, the transceiver module in the part 1530 is configured to perform a receiving and sending-related process performed by a communication device in the embodiments shown in FIG. 5 to FIG. 11.

It should be understood that FIG. 15 is merely an example rather than a limitation. The network device including the processor, the memory, and the transceiver may not depend on the structures shown in FIG. 12 to FIG. 14.

When the communication apparatus 1500 is the chip, the chip includes a transceiver, a memory, and a processor. The transceiver may be an input/output circuit or a communication interface. The processor is a processor, a microprocessor, or an integrated circuit integrated on the chip. A sending operation performed by the network device in the foregoing method embodiments may be understood as an output of the chip, and a receiving operation performed by the network device in the foregoing method embodiments may be understood as an input of the chip.

FIG. 16 is a block diagram of a communication apparatus 1600 according to an embodiment of this application. The communication apparatus 1600 may be a terminal device 120, a processor or a chip of the terminal device 120. The communication apparatus 1600 may be configured to perform an operation performed by the terminal device 120 or a communication device in the foregoing method embodiments.

When the communication apparatus 1600 is the terminal device 120, FIG. 16 is a diagram of a simplified structure of the terminal device. As shown in FIG. 16, the terminal device includes a processor, a memory, and a transceiver. The memory may store computer program code. The transceiver includes a transmitter 1631, a receiver 1632, a radio frequency circuit (not shown in FIG. 16), an antenna 1633, and an input/output apparatus (not shown in FIG. 16).

The processor is mainly configured to: process a communication protocol and communication data, control the terminal device, execute a software program, process data of the software program, and the like. The memory is mainly configured to store the software program and data. The radio frequency circuit is mainly configured to: perform conversion between a baseband signal and a radio frequency signal, and process the radio frequency signal. The antenna is mainly configured to receive and send a radio frequency signal in a form of an electromagnetic wave. The input/output apparatus, for example, a touchscreen, a display screen, or a keyboard, is mainly configured to receive data inputted by a user and output data to the user. It should be noted that some types of terminal devices may have no input/output apparatus.

When needing to send data, after performing baseband processing on the to-be-sent data, the processor outputs a baseband signal to the radio frequency circuit; and the radio frequency circuit performs radio frequency processing on the baseband signal and then sends the radio frequency signal to the outside in a form of an electromagnetic wave through the antenna. When data is sent to the terminal device, the radio frequency circuit receives the radio frequency signal through the antenna, converts the radio frequency signal into a baseband signal, and outputs the baseband signal to the processor. The processor converts the baseband signal into data, and processes the data. For ease of description, FIG. 16 merely shows one memory, one processor, and one transceiver. In an actual terminal device product, there may be one or more processors and one or more memories. The memory may also be referred to as a storage medium, a storage device, or the like. The memory may be disposed independent of the processor, or may be integrated with the processor. This is not limited in embodiments of this application.

In this embodiment of this application, the antenna and the radio frequency circuit that have sending and receiving functions may be considered as a transceiver module of the terminal device, and the processor that has a processing function may be considered as a processing module of the terminal device.

As shown in FIG. 16, the terminal device may include a processor 1610, a memory 1620, and a transceiver 1630. The processor 1610 may also be referred to as a processing unit, a processing board, a processing module, a processing apparatus, or the like. The transceiver 1630 may also be referred to as a transceiver unit, a transceiver machine, a transceiver apparatus, or the like.

Optionally, a component for implementing a receiving function in the transceiver 1630 may be considered as a receiving module, and a component for implementing a sending function in the transceiver 1630 may be considered as a sending module. In other words, the transceiver 1630 includes a receiver machine and a transmitter machine. The transceiver may also be sometimes referred to as a transceiver machine, a transceiver module, a transceiver circuit, or the like. The receiver machine may also be sometimes referred to as a receiver, a receiving module, a receiver circuit, or the like. The transmitter machine may also be sometimes referred to as a transmitter, a transmitting module, a transmitter circuit, or the like.

For example, in an implementation, the processor 1610 is configured to perform a processing action on a side of the terminal device in the embodiments shown in FIG. 5 to FIG. 11, and the transceiver 1630 is configured to perform receiving and sending actions on side of the terminal device in FIG. 5 to FIG. 11.

For example, in an implementation, the processor 1610 is configured to perform a processing action on a side of the terminal device in the embodiments shown in FIG. 5 to FIG. 11, and the transceiver 1630 is configured to perform receiving and sending actions on side of the terminal device in FIG. 5 to FIG. 11.

It should be understood that FIG. 16 is merely an example rather than a limitation. The terminal device including the transceiver module and the processing module may not depend on the structures shown in FIG. 12 to FIG. 14.

When the communication apparatus 1600 is the chip, the chip includes a processor, a memory, and a transceiver. The transceiver may be an input/output circuit or a communication interface. The processor may be a processing module, a microprocessor, or an integrated circuit integrated on the chip. A sending operation performed by the terminal device in the foregoing method embodiments may be understood as an output of the chip, and a receiving operation performed by the terminal device in the foregoing method embodiments may be understood as an input of the chip.

This application further provides a chip. The chip includes a processor, configured to invoke instructions from a memory and run the instructions stored in the memory, so that a communication device on which the chip is installed is enabled to perform the methods in the foregoing examples.

This application further provides another chip. The chip includes an input interface, an output interface, and a processor. The input interface, the output interface, and the processor are connected through an internal connection path. The processor is configured to execute code in a memory; and when the code is executed, the processor is configured to perform the methods in the foregoing examples. Optionally, the chip further includes the memory, and the memory is configured to store a computer program or the code.

This application further provides a processor, configured to couple to a memory, and configured to perform the method and the function of the network device or the terminal device in any one of the foregoing embodiments.

Another embodiment of this application provides a computer program product including instructions. When the computer program product is run on a computer, the method in the foregoing embodiments is implemented.

This application further provides a computer program. When the computer program is run on a computer, the method in the foregoing embodiment is implemented.

Another embodiment of this application provides a computer-readable storage medium. The computer-readable storage medium stores a computer program. When the computer program is executed by a computer, the method in the foregoing embodiments is implemented.

In the descriptions of embodiments of this application, unless otherwise specified, "a plurality of" means two or more. "At least one of the following items (pieces)" or a similar expression thereof refers to any combination of these items, including any combination of singular items (pieces) or plural items (pieces). For example, at least one item (piece) of a, b, or c may indicate: a, b, c, a and b, a and c, b and c, or a, b, and c, where a, b, and c may be singular or plural.

In addition, to clearly describe the technical solutions in embodiments of this application, terms such as "first" and "second" are used in embodiments of this application to distinguish between same items or similar items that provide basically same functions or purposes. A person skilled in the art may understand that the terms such as "first" and "second" do not limit a quantity or an execution sequence, and the terms such as "first" and "second" do not indicate a definite difference. In addition, in embodiments of this application, terms such as "example" or "for example" are used to represent an example or a description.

Any embodiment or design solution described by using "example" or "for example" in embodiments of this application should not be explained as being more preferred or having more advantages than another embodiment or design solution. Exactly, use of the terms such as "example" or "for example" is intended to present a related concept in a specific manner for ease of understanding.

Unless otherwise specified, "/" in the descriptions of embodiments of this application represents an "or" relationship between associated objects. For example, A/B may represent A or B. In this application, "and/or" describes only an association relationship between associated objects and represents that three relationships may exist. For example, A and/or B may represent the following three cases: Only A exists, both A and B exist, and only B exists, where A and B may be singular or plural.

Sequence numbers of the foregoing processes do not mean execution sequences in embodiments of this application. The execution sequences of the processes should be determined based on functions and internal logic of the processes, and should not be construed as any limitation on the implementation processes of embodiments of this application.

A person of ordinary skill in the art may be aware that, in combination with the examples described in embodiments disclosed in this specification, units and algorithm steps may be implemented by electronic hardware or a combination of computer software and electronic hardware. Whether the functions are performed by hardware or software depends on particular application and design constraint conditions of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In the several embodiments provided in this application, it should be understood that the disclosed system, apparatus, and method may be implemented in other manners. For example, the described apparatus embodiment is merely an example. For example, division into the units is merely logical function division and may be other division in actual implementation. For example, a plurality of units or components may be combined or integrated into another system, or some features may be ignored or not performed.

**In** addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and components displayed as units may or may not be physical units, that is, may be located in one place, or may be distributed on a plurality of network units. Some or all of the units may be selected based on actual requirements to achieve the objectives of the solutions of embodiments.

In addition, functional units in embodiments of this application may be integrated into one processing unit, or each unit may exist alone physically, or two or more units may be integrated into one unit.

When functions are implemented in the form of a software functional unit and sold or used as an independent product, the functions may be stored in a computer-readable storage medium. Based on such an understanding, the technical solutions of embodiments of this application essentially, or the part contributing to a conventional technology, or some of the technical solutions may be implemented in a form of a software product. The computer software product is stored in a storage medium, and includes several instructions for instructing a computer device (which may be a personal computer, a server, or a network device) to perform all or some of the steps of the methods described in embodiments of this application. The foregoing storage medium includes any medium that can store program code, such as a USB flash drive, a removable hard disk, a ROM, a RAM, a magnetic disk, or an optical disc.

The foregoing descriptions are merely specific implementations of embodiments of this application, but are not intended to limit the protection scope of embodiments of this application. Any variation or replacement readily figured out by a person skilled in the art within the technical scope disclosed in embodiments of this application shall fall within the protection scope of embodiments of this application. Therefore, the protection scope of embodiments of this application should be subject to the protection scope of the claims.

## Claims

1. A communication method, comprising:
determining, by a first terminal device, first information, wherein the first information indicates a quantity of first resources used by the first terminal device to monitor a first signal, and the first signal is used for waking up the first terminal device; and
monitoring, by the first terminal device, the first signal based on the first information.

2. The method according to claim 1, wherein the first information comprises a first transmission level, and the first transmission level corresponds to the quantity of first resources.

3. The method according to claim 2, wherein the first signal comprises the first transmission level.

4. The method according to any one of claims 1 to 3, wherein the first information further indicates a first time period, and monitoring, by the first terminal device, the first signal based on the first information comprises:
monitoring, by the first terminal device, the first signal in the first time period based on the first information.

5. The method according to any one of claims 1 to 4, wherein the first resource corresponds to at least one of a first frequency domain resource and a first time domain resource.

6. The method according to claim 5, wherein the first resource corresponds to the first frequency domain resource, and the method further comprises:
sending, by the first terminal device, second information to a network device, wherein the second information indicates that the first terminal device supports transmission level adjustment.

7. The method according to claim 5 or 6, wherein the first resource corresponds to the first frequency domain resource, a value of a second transmission level is N times a value of the first transmission level, and the second transmission level corresponds to a quantity of second frequency domain resources;
the second frequency domain resource is used for sending the first signal, the first signal sent on the second frequency domain resource is N repeated transmissions of the first signal received on the first frequency domain resource, and N is a positive integer; and
the quantity of second frequency domain resources is greater than or equal to N times a quantity of first frequency domain resources.

8. The method according to claim 5, wherein the first resource corresponds to the first time domain resource, a value of a third transmission level is N times a value of the first transmission level, and the third transmission level corresponds to a quantity of second time domain resources;
the second time domain resource is used for sending the first signal, the first signal sent on the second time domain resource is N repeated transmissions of the first signal received on the first time domain resource, and N is a positive integer; and
the quantity of second time domain resources is N times a quantity of first time domain resources.

9. The method according to any one of claims 1 to 8, wherein determining, by the first terminal device, the first information comprises:
receiving, by the first terminal device, the first information from the network device, wherein the first information further indicates the first terminal device to monitor the first signal.

10. The method according to claim 9, wherein the first terminal device comprises a first module and a second module, the first signal is used for waking up the first module, and the method further comprises:
receiving, by the first module, a second signal from the network device, wherein the second signal is used for measurement;
performing, by the first module, measurement on the second signal and obtaining a first measurement report; and
sending, by the first module, a second measurement report to the network device, wherein the second measurement report is determined by the first module based on the first measurement report and a first mapping relationship.

11. The method according to claim 10, wherein the second measurement report comprises channel state information between the second module and the network device, and the channel state information is related to the first information.

12. The method according to claim 9, wherein the first terminal device comprises a first module and a second module, the first signal is used for waking up the first module, and the method further comprises:
receiving, by the second module, a third signal from the network device, wherein the third signal is used for measurement;
performing, by the second module, measurement on the third signal and obtaining a third measurement report; and
sending, by the first module, the third measurement report to the network device.

13. The method according to claim 12, wherein the third measurement report comprises channel state information between the second module and the network device, and the channel state information is related to the first information.

14. The method according to any one of claims 1 to 8, wherein the first terminal device comprises a first module and a second module, the first signal is used for waking up the first module, and the method further comprises:
receiving, by the first module, a fourth signal from the network device, wherein the fourth signal is used for measurement;
performing, by the first module, measurement on the fourth signal and obtaining a fourth measurement report; and
determining, by the first module, a fifth measurement report based on the fourth measurement report and a second mapping relationship.

15. The method according to claim 14, wherein the fifth measurement report comprises channel state information between the second module and the network device, and the channel state information is related to the first information.

16. The method according to any one of claims 1 to 8, wherein the first terminal device comprises a first module and a second module, the first signal is used for waking up the first module, and the method further comprises:
receiving, by the second module, a fifth signal from the network device, wherein the fifth signal is used for measurement; and
performing, by the second module, measurement on the fifth signal and obtaining a sixth measurement report.

17. The method according to claim 16, wherein the sixth measurement report comprises channel state information between the second module and the network device, and the channel state information is related to the first information.

18. A communication method, comprising:
determining, by a network device, first information, wherein the first information indicates a first terminal device to monitor a first signal, the first signal is used for waking up the first terminal device, and the first information further indicates a quantity of first resources used by the first terminal device to monitor the first signal; and
sending, by the network device, the first information to the first terminal device.

19. The method according to claim 18, wherein the first information comprises a first transmission level, and the first transmission level corresponds to the quantity of first resources.

20. The method according to claim 19, wherein the first signal comprises the first transmission level.

21. The method according to any one of claims 18 to 20, wherein the first information further indicates a first time period, and the first time period is a time period in which the first terminal device monitors the first signal.

22. The method according to any one of claims 18 to 21, wherein the first resource corresponds to at least one of a first frequency domain resource and a first time domain resource.

23. The method according to claim 22, wherein the first resource corresponds to the first frequency domain resource, and the method further comprises:
receiving, by the network device, second information from the first terminal device, wherein the second information indicates that the first terminal device supports transmission level adjustment.

24. The method according to claim 22 or 23, wherein the first resource corresponds to the first frequency domain resource, a value of the first transmission level is the same as a value of a second transmission level, and the second transmission level corresponds to a quantity of second frequency domain resources;
a gap exists between the first frequency domain resource and the second frequency domain resource, the second frequency domain resource is used by a second terminal device to monitor a second signal, and the second signal is used for waking up the second terminal device; and
a quantity of first frequency domain resources is the same as the quantity of second frequency domain resources.

25. The method according to any one of claims 22 to 24, wherein the first resource corresponds to the first frequency domain resource, a value of a third transmission level is N times the value of the first transmission level, and the third transmission level corresponds to a quantity of third frequency domain resources;
the third frequency domain resource is used for sending the first signal, the first signal sent on the third frequency domain resource is N repeated transmissions of the first signal received on the first frequency domain resource, and N is a positive integer; and
the quantity of third frequency domain resources is greater than or equal to N times the quantity of first frequency domain resources.

26. The method according to claim 22, wherein the first resource corresponds to the first time domain resource, a value of a fourth transmission level is N times a value of the first transmission level, and the fourth transmission level corresponds to a quantity of second time domain resources;
the second time domain resource is used for sending the first signal, the first signal sent on the second time domain resource is N repeated transmissions of the first signal received on the first time domain resource, and N is a positive integer; and
the quantity of second time domain resources is N times a quantity of first time domain resources.

27. The method according to any one of claims 18 to 26, wherein the first terminal device comprises a first module and a second module, the first signal is used for waking up the first module, and the method further comprises:
sending, by the network device, a third signal to the first module, wherein the third signal is used for measurement; and
receiving, by the network device, a second measurement report from the first module, wherein
the second measurement report is determined by the first module based on a first measurement report and a first mapping relationship, and the first measurement report is obtained by the first module through measurement on the third signal.

28. The method according to claim 27, wherein the second measurement report comprises channel state information between the second module and the network device, and the channel state information is related to the first information.

29. The method according to any one of claims 18 to 26, wherein the first terminal device comprises a first module and a second module, the first signal is used for waking up the first module, and the method further comprises:
sending, by the network device, a fourth signal to the second module, wherein the fourth signal is used for measurement; and
receiving, by the network device, a third measurement report from the first module, wherein the third measurement report is obtained by the second module through measurement on the fourth signal.

30. The method according to claim 29, wherein the third measurement report comprises channel state information between the second module and the network device, and the channel state information is related to the first information.

31. A communication apparatus, comprising a processor, wherein the processor is configured to enable, by executing a computer program or instructions or through a logic circuit,
the communication apparatus to perform the method according to any one of claims 1 to 17, or
the communication apparatus to perform the method according to any one of claims 18 to 30.

32. The communication apparatus according to claim 31, wherein the communication apparatus further comprises a memory, and the memory is configured to store the computer program or the instructions.

33. The communication apparatus according to claim 31 or 32, wherein the communication apparatus further comprises a communication interface, and the communication interface is configured to input a signal and/or output a signal.

34. A communication apparatus, comprising a logic circuit and an input/output interface, wherein the input/output interface is configured to input a signal and/or output a signal; and
the logic circuit is configured to perform the method according to any one of claims 1 to 17; or
the logic circuit is configured to perform the method according to any one of claims 18 to 30.

35. A computer-readable storage medium, wherein the computer-readable storage medium stores a computer program or instructions; and when the computer program or the instructions are run on a computer,
the method according to any one of claims 1 to 17 is performed, or
the method according to any one of claims 18 to 30 is performed.

36. A computer program product, comprising instructions, wherein when the instructions are run on a computer,
the method according to any one of claims 1 to 17 is performed, or
the method according to any one of claims 18 to 30 is performed.

37. A communication system, comprising a first terminal device and a network device, wherein
the first terminal device is configured to perform the method according to any one of claims 1 to 17; and
the network device is configured to perform the method according to any one of claims 18 to 30.
